(19) **Europäisches Patentamt European Patent Office Office européen des brevets**

(11) **EP 2 037 105 B1**

(12) **EUROPEAN PATENT SPECIFICATION**

(45) Date of publication and mention of the grant of the patent:
**29.06.2016 Bulletin 2016/26**

(51) Int Cl.:
*F02D 41/00* *(2006.01)*    *F02D 41/14* *(2006.01)*

(21) Application number: **08253019.7**

(22) Date of filing: **12.09.2008**

(54) **Fuel injection control device for internal combustion engine and straddle type vehicle provided with the same**

Kraftstoffeinspritzsteuervorrichtung für eine Brennkraftmaschine und damit ausgerüstetes Fahrzeug

Dispositif de contrôle d'injection de carburant pour moteur à combustion interne et véhicule équipé de celui-ci

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.09.2007 JP 2007239422**

(43) Date of publication of application:
**18.03.2009 Bulletin 2009/12**

(73) Proprietor: **Yamaha Hatsudoki Kabushiki Kaisha Iwata-shi, Shizuoka 438-8501 (JP)**

(72) Inventors:
  • **Nonaka, Daisuke**
    **Shizuoka-ken 438-8501 (JP)**

  • **Nakamura, Michihisa**
    **Shizuoka-ken 438-8501 (JP)**
  • **Takahashi, Michiyasu**
    **Shizuoka-ken 438-8501 (JP)**

(74) Representative: **Moreland, David et al**
    **Marks & Clerk LLP**
    **Aurora**
    **120 Bothwell Street**
    **Glasgow G2 7JS (GB)**

(56) References cited:
    **EP-A1- 1 905 990**    **WO-A1-2006/129198**
    **FR-A1- 2 892 769**    **US-A1- 2004 162 667**
    **US-B1- 6 298 838**

**Description**

FIELD OF THE INVENTION

The present invention relates to a fuel injection control device for an internal combustion engine and a straddle type vehicle provided with the same.

BACKGROUND OF THE INVENTION

It is known to provide an internal combustion engine capable of using a mixed fuel formed by mixing gasoline and alcohol. Such mixed fuel has different characteristics according to the difference in mixing ratio of alcohol. In view of this, technology has been proposed for controlling the fuel injection system of an engine to correct for different mixing ratios.

A fuel injection amount controller for an internal combustion engine disclosed in JP-A-5-125984 (Paragraphs 0025 to 0029) performs the following correction. The concentration of alcohol in a mixed fuel is first detected by means of an alcohol concentration sensor. An alcohol concentration correction coefficient in accordance with the detected alcohol concentration is then determined on the basis of a table set in advance. Following this, a standard value of injection time of a fuel injection valve is multiplied by the alcohol concentration correction coefficient to calculate a corrected fuel injection time.

In a correction method, using the fuel injection amount control device, a standard value of injection time of a fuel injection valve is multiplied by the alcohol concentration correcting coefficient, the method being a comparatively rough correction method. In the case of the mixed fuel, however, variation of the mixing ratio of alcohol also results in variation of a theoretical air fuel ratio for the mixed fuel. Further, a preferred or optimised value of air fuel ratio does not always accord with the theoretical air fuel ratio, and in practice varies in accordance with the temperature of the internal combustion engine. In the case of mixed fuel, however, the optimised value of the air fuel ratio varies not only in accordance with the temperature of the internal combustion engine but also in accordance with the mixing ratio of alcohol. Accordingly, it is considered difficult to carry out highly precise control by means of the method that a standard value of injection time of a fuel injection valve is multiplied by the predetermined coefficient.

In such a fuel injection amount control device, consideration can be given to the advance preparation and provision of a large number of maps to correspond to every conceivable driving condition to permit determination of a correction coefficient on the basis of an appropriate map in order to achieve precise control. In such a case, however, a large number of maps would have to be prepared and accessed, so that the structure of the control device becomes unduly complicated. Further fuel injection amont controller are know from prior art documents WO2006/129198 A1 and US 2004/16 2667 A1.

In view of the above, an object of an embodiment of the invention is to provide a fuel injection control device capable of supplying an internal combustion engine with the appropriate amount of fuel even in the situation where the mixing ratio of alcohol varies, without excessively complicating the structure of the control device.

SUMMARY OF THE INVENTION

In accordance with the invention there is provided a fuel injection control device for an internal combustion engine including a fuel injection valve capable of injecting a mixed fuel formed by mixing gasoline and alcohol, an intake passage and an exhaust passage, the fuel injection control device comprising: an intake pressure sensor for detecting intake pressure in the intake passage; an air fuel ratio sensor for location in the exhaust passage; a temperature sensor for detecting the temperature of the internal combustion engine; a speed sensor for detecting the speed of the internal combustion engine; and a control unit for controlling the fuel injection valve, wherein the control unit includes: an air fuel ratio feedback correction coefficient calculation means for calculating an air fuel ratio feedback correction coefficient on the basis of a value detected by the air fuel ratio sensor; a mixing ratio calculation means for calculating a mixing ratio of alcohol of a mixed fuel on the basis of the air fuel ratio feedback correction coefficient; a theoretical air fuel ratio calculation means for calculating a theoretical air fuel ratio of a mixed fuel having the mixing ratio of alcohol calculated by the mixing ratio calculation means; a reflection coefficient calculation means for storing a plurality of pre-set values of air fuel ratio correction coefficient, each pre-set value being determined on the basis of a particular predetermined mixing ratio of alcohol and a particular predetermined engine temperature and using the pre-set values for performing an interpolation calculation of a value of an air fuel ratio correction coefficient reflecting the mixing ratio of alcohol calculated by the mixing ratio calculation means and the temperature of the internal combustion engine, detected by the temperature sensor; a target air fuel ratio calculation means for calculating a target air fuel ratio by means of the theoretical air fuel ratio on the basis of the value of the air fuel ratio correction coefficient calculated by the reflection coefficient calculation means; an intake air amount calculation means for calculating an intake air amount in the intake passage on the basis of the intake pressure detected by the intake pressure sensor and the speed of the internal combustion engine detected by the speed sensor; and an injection amount calculating means for calculating a basic injection amount for the fuel injection valve on the basis of the intake air amount and the target air fuel ratio and for calculating an actual injection amount on the basis of the basic injection amount and the air fuel ratio feedback correction coefficient.

In accordance with the fuel injection control device, an air fuel ratio correction coefficient, which reflects the influence of the mixing ratio of alcohol and the temperature of an the engine, is calculated and the calculated air fuel ratio correction coefficient is used to calculate a target air fuel ratio on the basis of a theoretical air fuel ratio. This allows highly precise control, taking account of the influence of the mixing ratio of alcohol and the temperature of the engine, to be achieved. Moreover, the air fuel ratio correction coefficient is not obtained by means of a large number of maps but is calculated by interpolation calculation. Accordingly, it is not necessary to prepare a large number of maps in advance, and thereby, the structure of the control device is not likely to be excessively complicated.

In accordance with embodiments of the invention, a fuel injection control device capable of supplying an internal combustion engine with the proper amount of fuel, even in the case that the mixing ratio of alcohol varies, can be put into practice without excessively complicating a structure of the control device.

BRIEF DESCRIPTION OF THE DRAWINGS

Fig.1 is a side view of a motorcycle;
Fig. 2 is a structural view of an engine and various kinds of sensors;
Fig. 3 is a block diagram of fuel injection control in accordance with Embodiment 1;
Fig. 4 is a flowchart of fuel injection control;
Fig. 5 is a flowchart of calculation of a target air fuel ratio;
Fig. 6 illustrates an $O_2$ feedback correction coefficient;
Fig. 7 illustrates an increase and decrease value of a mixing ratio of ethanol.
Fig. 8 illustrates a relation between a mixing ratio of ethanol and a theoretical air fuel ratio;
Fig. 9 illustrates a reflection coefficient in non-linear interpolation calculation;
Fig. 10 illustrates a QT characteristic;
Fig. 11 illustrates an example of a linear interpolation calculation of QT;
Fig. 12 illustrates an example of a non-linear interpolation calculation of QT;
Fig. 13 illustrates a difference in divided pressure in accordance with fuel composition;
Fig. 14 is a block diagram of fuel injection control in accordance with Embodiment 2;
Fig. 15 illustrates a relation between temperature of an engine and a constant CT;
Fig. 16 shows a three-dimensional map illustrating a relation among a mixing ratio of ethanol, temperature of an engine and an ethanol condensed-matter correction coefficient $E_{corr.}$ ;
Fig. 17 is a block diagram of fuel injection control in accordance with Embodiment 3;
Fig. 18(a) shows an intake air amount conversion map relating to E100;
Fig. 18(b) shows an intake air amount conversion map relating to E22.

DETAILED DESCRIPTION OF THE DRAWINGS

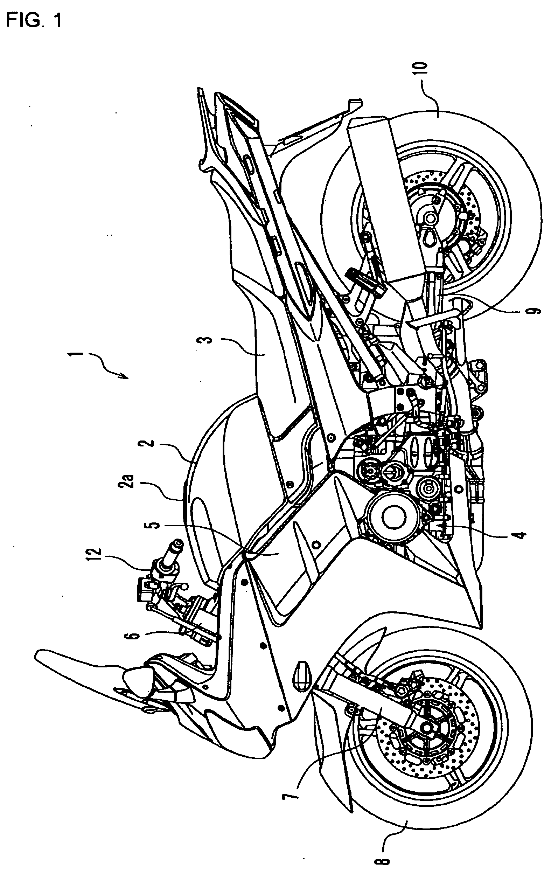

As shown in Fig. 1, a straddle type vehicle in accordance with an embodiment of the invention is a motorcycle 1. The type of the motorcycle 1 is not limited at all and may be a so-called motorcycle, a scooter, a moped, a motorbike and the like. Further, the straddle type vehicle in accordance with the invention is a vehicle, which is straddled by a rider, or a vehicle equivalent to the same and may include not only a motorcycle but also an ATV (all terrain vehicle) and the like.

The motorcycle 1 is capable of using gasoline, alcohol such as ethanol and a mixed fuel formed by mixing gasoline and alcohol, as fuel. In the following description, exemplified is a case of using ethanol as an example of alcohol.

The illustrated motorcycle 1 comprises a fuel tank 2, a riding seat 3, an engine 4 and a body frame 5, as shown in Fig. 1. The fuel tank 2 is provided with a lid 2a. A head pipe 6 is provided on a front side of the body frame 5. On the head pipe 6 is a steering shaft (not shown). A handle 12 is provided on an upper part of the steering shaft. On a lower part of the steering shaft, is a front fork 7. A front wheel 8 is held on a lower end part of the front fork 7. A swing arm 9 is held on the body frame 5 so as to be freely swingable. On a rear end part of the swing arm 9 is a rear wheel 10.

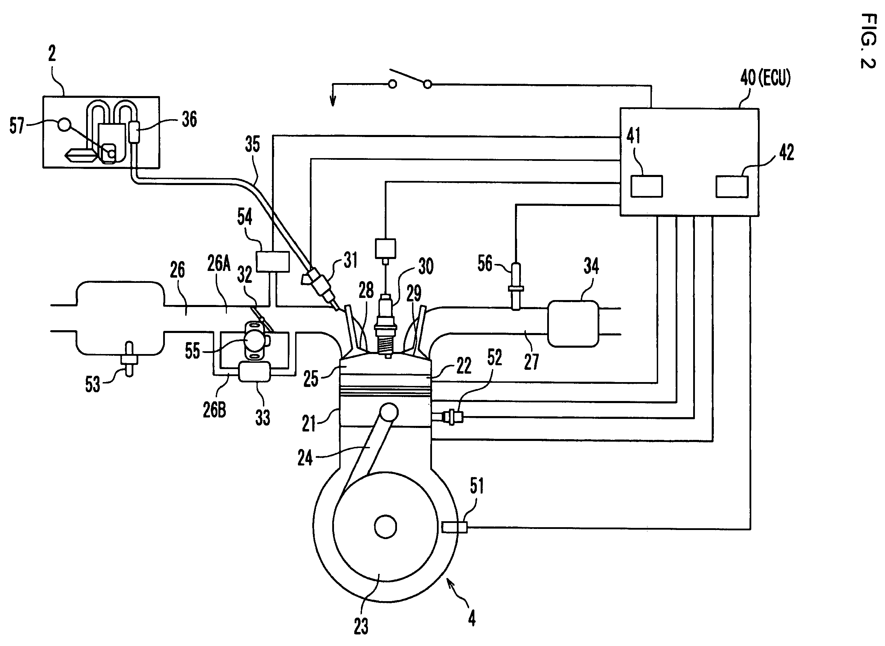

The engine 4 comprises a cylinder 21, a piston 22 reciprocating in the cylinder 21, a crank shaft 23 and a con rod 24 for connecting the piston 22 and the crank shaft 23, as shown in Fig. 2. Further, the engine 4 comprises a fuel injection valve 31 for injecting fuel and an ignition unit 30 for carrying out ignition of the fuel in a combustion chamber 25. The engine 4 is provided with a speed sensor 51 for detecting the number of rotations of the crank shaft 23 and a temperature sensor 52 for detecting the temperature of the engine 4. The temperature sensor 52 may be a sensor for detecting the temperature of a part of the engine 4 (a cylinder, for example) and may be a sensor for detecting the temperature of cooling water in the case that the engine 4 is of a water cooled type. That is to say, the temperature sensor 52 may be a sensor for directly detecting the temperature of the engine 4 as well as a sensor for indirectly detecting the temperature through the cooling water or the like.

The engine 4 includes an intake passage 26 for introducing air into the combustion chamber 25, an intake valve 28 for opening and closing between the intake passage 26 and the combustion chamber 25, an exhaust passage 27 for exhausting exhaust gas from the combustion chamber 25 and an exhaust valve 29 for opening and closing between the combustion chamber 25 and the exhaust passage 27. A fuel injection valve 31 is arranged so as to inject the fuel into the intake passage 26. However, in other embodiments the fuel injection valve 31 may be a valve for injecting the fuel into the combustion chamber 25.

In the intake passage 26, provided are a temperature sensor 53 for detecting the temperature of intake air and a pressure sensor 54 for detecting intake pressure, which is the pressure inside the intake passage 26. The intake passage 26 includes a main passage 26A in which a throttle valve 32 is housed and a bypass passage 26B for bypassing the throttle valve 32. The throttle valve 32 is provided with a throttle position sensor 55 for detecting the degree of opening of the throttle valve 32. The bypass passage 26B is provided with a flow rate adjusting mechanism 33 for adjusting the area of a flow channel to control the bypass quantity.

The exhaust passage 27 is provided with a catalyst 34. The exhaust passage 27 is also provided with an $O_2$ sensor 56 for detecting oxygen included in the exhaust gas as an air fuel ratio sensor. The air fuel ratio sensor should be a sensor at least capable of detecting that the air fuel ratio is on the rich side or on the lean side. In accordance with the $O_2$ sensor 56 according to the embodiment, it can be detected whether the air fuel ratio is on the rich side or the lean side. It goes without saying, however, that a sensor for linearly outputting the air fuel ratio (a linear A/F sensor), namely, a sensor for outputting the air fuel ratio per se may be used as the air fuel ratio sensor.

The fuel tank 2 and the fuel injection valve 31 are connected by means of a fuel pipe 35. In the fuel tank 2 are a fuel pump 36 for supplying the fuel pipe 35 with fuel and a fuel sensor 57 for detecting the fuel quantity in the fuel tank 2. The specific form of the fuel sensor 57 is not limited at all. A well-known sensor such as a liquid surface sensor, for example, may be used. In the motorcycle 1, no sensor is provided for detecting the concentration of ethanol in the fuel tank 2.

The motorcycle 1 comprises an ECU (electric control unit) 40 for controlling the engine 4. The ECU 40 includes a calculation unit 41 for executing various kinds of calculations, to be described bellow, and a storing unit 42 for storing a control program for performing the control functions to be described below and storing various kinds of information. The particular form of the hardware structures of the calculation unit 41 and the storing unit 42 are not limited at all. A CPU, for example, can be used as the calculation unit 41 while a ROM, a RAM or the like can be used as the storing unit 42. The ECU 40 is connected to the above-described sensors so that a detection signal would be sent from each sensor to the ECU 40. In particular, the ECU 40 is connected to the speed sensor 51, the temperature sensor 52, the temperature sensor 53, the pressure sensor 54, the throttle position sensor 55, the $O_2$ sensor 56 and the fuel sensor 57.

The ECU 40 controls the fuel injection valve 31 so that the air fuel ratio is a target air fuel ratio. Now, described will be control of the fuel injection valve 31 (referred to as fuel injection control, hereinafter).

-Outline of fuel injection control-

The fuel injection control in accordance with the embodiment tracks deviation of an actual air fuel ratio from a target air fuel ratio, the deviation being calculated on the basis of a detection signal from the $O_2$ sensor 56 and then used to adjust the injection amount from the fuel injection valve 31 so that the deviation is reduced to zero. That is to say, is the embodiment utilises feedback control on the basis of the detection signal from the $O_2$ sensor 56. A preferable or optimum target air fuel ratio is changed in accordance with the ratio of ethanol included in a fuel, that is, the mixing ratio of ethanol. Further, the preferable target air fuel ratio is changed also in accordance with the temperature of the engine 4. Accordingly, in Embodiment 1, the correction carried out for the feedback control takes account of the mixing ratio of ethanol and the temperature of the engine. Moreover, the mixing ratio of ethanol is not directly detected by means of a sensor but is estimated on the basis of a detection signal from the $O_2$ sensor 56 in Embodiment 1.

-Whole flow of fuel injection control-

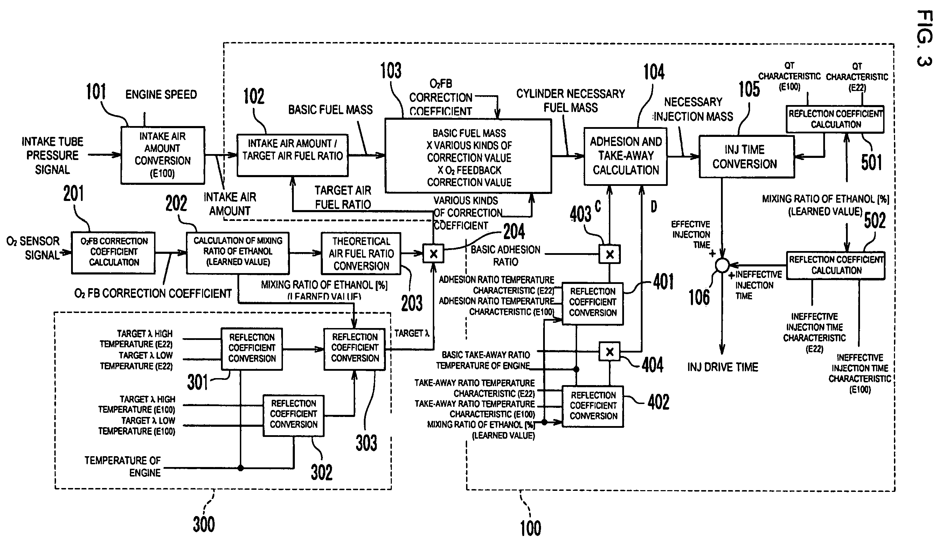

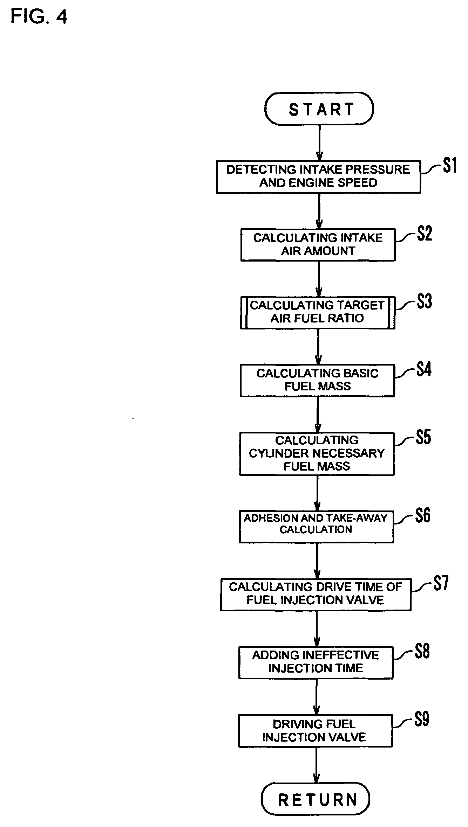

The elements of the fuel injection control will now be described, with reference to a control block diagram in Fig. 3 and a flowchart in Fig. 4.

In Step S1, intake pressure is first detected by means of a pressure sensor 54, and engine speed detected by means of a speed sensor 51. In Step S2, an intake air amount calculation part 101 then refers to a previously prepared intake air amount conversion map to calculate the intake air amount in accordance with the intake pressure and the engine speed. In the specification, "calculation" includes not only calculation of a target value by means of a numerical formula but also obtaining the target value from a map and the like. In Embodiment 1, the intake air amount conversion map used is a map for the case where the mixing ratio of ethanol is 100 % (namely, an ethanol fuel with no gasoline included). Of course, other intake air amount conversion maps may be used.

The process then goes to Step S3 to calculate the target air fuel ratio. The calculation of the target air fuel ratio will be described in detail later.

The process then goes to Step 4 to calculate basic fuel mass by means of a calculation part 102 on the basis of the intake air amount and the target air fuel ratio. The basic fuel mass in the above context means the fuel injection amount before carrying out feedback correction. The basic fuel mass is calculated as follows: Basic fuel mass = Intake air amount / Target air fuel ratio.

In step S5, a calculation part 103 calculates cylinder necessary fuel mass by multiplying the basic fuel mass by a predetermined correction coefficient. In particular, cylinder necessary fuel mass = Basic fuel mass $\times$ Various kinds of correction coefficient $\times$ $O_2$ feedback correction coefficient. The various kinds of correction coefficient may include a correction coefficient particular to the engine 4 and a correction coefficient calculated from prior testing and experiment.

The process then goes to Step S6 to carry out an adhesion and take-away calculation by means of a calculation part 104. "Adhesion of a fuel" in the specification means the situation where some of the fuel injected from the fuel injection valve 31 remains on a wall surface of the intake passage 26 to be supplied into the combustion chamber 25 in an intake cycle after the combustion chamber 25 is supplied with the fuel that did not adhere to or remain on the wall surface. Further, "take-away of a fuel" means the situation where the fuel adhered to the intake passage 26, namely, the fuel remaining on the wall surface of the intake passage 26, is carried away from the intake passage 26 to be supplied to the combustion chamber 25 due to a flow of inhaled air. The amount of the fuel supplied to the combustion chamber 25 decreases below the amount of fuel actually injected when fuel injected from the fuel injection valve 31 adheres to the intake passage 26. On the other hand, the amount of the fuel supplied to the combustion chamber 25 increases above the amount of fuel actually injected when the fuel adhering to the intake passage 26 is taken away on the flow of the inhaled air to the combustion chamber 25. The adhesion and take-away calculation is a correction taking into consideration the influence of such adhesion and take-away of the fuel. The necessary injection mass is calculated with reference to the adhesion and take-away calculation. The necessary injection mass is obtained as follows: Necessary injection mass = Cylinder necessary fuel mass $\times$ Adhesion correction coefficient C $\times$ Take-away correction coefficient D. Specific calculation methods of an adhesion correction coefficient C and a take-away correction coefficient D will be described later in detail.

Following the calculation of the necessary injection mass in Step S6, a calculation part 105 calculates injection time of the fuel injection valve 31, which is necessary to inject the fuel corresponding to the necessary injection mass (referred to as effective injection time, hereinafter). In other words, a period of time for opening the fuel injection valve 31 is calculated. The process goes to Step S8 after the effective injection time is calculated. In Step S8, the effective injection time is added to ineffective injection time in an adder unit 106 to calculate drive time of the fuel injection valve 31. The ineffective injection time means a period of time when the fuel is not practically injected even with the fuel injection valve 31 being driven.

The process then goes to Step S9 to drive the fuel injection valve 31 for the drive time calculated as described above. A numeral 100 in Fig. 3 denotes an injection amount calculation part.

-Calculation of target air fuel ratio-

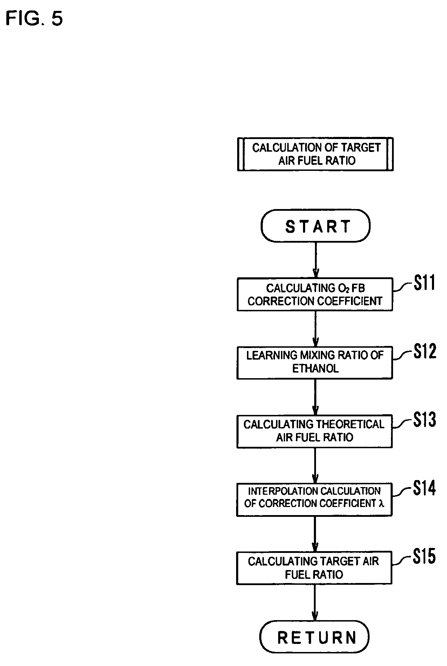

Now, a calculation of a target air fuel ratio in Step S3 will be described, with reference to a flowchart in Fig. 5. In calculating the target air fuel ratio, first calculated is an $O_2$ feedback correction coefficient (identified as an O2FB correction coefficient in Fig. 3 and Fig. 5) on the basis of a detection signal from the $O_2$ sensor 56 in Step S11. The $O_2$ feedback correction coefficient is also used in calculating the cylinder necessary fuel mass (refer to Step S5), as described above.

The $O_2$ feedback correction coefficient is large when the air fuel ratio is on the lean side, and small when the air fuel ratio is on the rich side. That is to say, the larger the air fuel ratio is, the larger a value of the $O_2$ feedback correction coefficient is while the smaller the air fuel ratio is, the smaller the value of the $O_2$ feedback correction coefficient is.

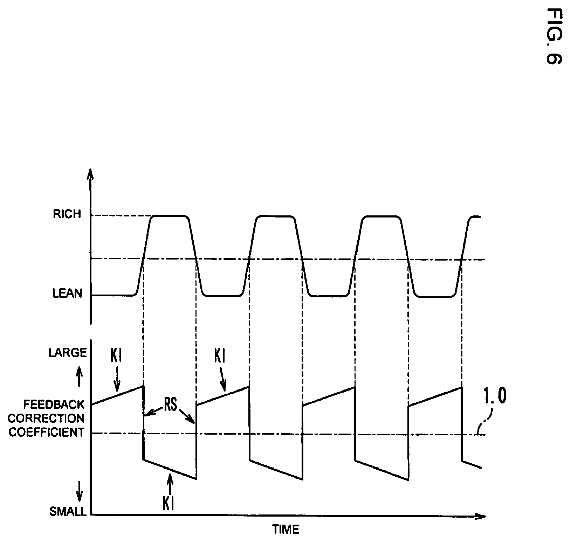

In particular, the $O_2$ feedback correction coefficient FB is calculated by means of a calculation part 201 as described below. That is to say, the calculation part 201 first determines whether the air fuel ratio is on the rich side or the lean side on the basis of a detection signal from the $O_2$ sensor 56 (refer to Fig. 6). In the case of the rich side, it is judged whether the ratio has been or has not been changed from the lean side to the rich side after comparison with a result of a preceding detection. A value FB - RS, which is obtained by subtracting a predetermined fixed number RS (wherein RS denotes a skip amount) from a current correction coefficient FB, is set as a new correction coefficient FB when the ratio has been changed from the lean side to the rich side. FB - KI (wherein KI denotes an integral amount, RS > KI) is set as a new correction coefficient FB in the case of no reverse of the ratio from the lean side to the rich side. On the other hand, when the determination indicates the air fuel ratio is on the lean side, the result is compared with a result of a preceding detection to judge whether the ratio has been reversed or not from the rich side to the lean side. A value FB + RS, which is obtained by adding the fixed number RS to the current correction coefficient FB, is set as a new correction coefficient FB in the case that the ratio is judged to have been reversed from the rich side to the lean side. FB + KI is set as a new correction coefficient FB in the case of no reverse of the ratio from the rich side to the lean side.

The process goes to Step S12 after the $O_2$ feedback correction coefficient FB is calculated. In Step S12, a calculation part 202 carries out a calculation of a mixing ratio of ethanol. The calculation of the mixing ratio of ethanol is to estimate the mixing ratio of ethanol in the fuel on the basis of the $O_2$ feedback correction coefficient FB. It can be said that learning is performed since the feedback is carried out to renew an estimated value. Accordingly, estimation of the mixing ratio of ethanol is referred to as learning while an estimated value of the mixing ratio is referred to as a learning value, in the following description.

The motorcycle 1 in accordance with the embodiment can use gasoline (that is, the mixing ratio of ethanol of 0 %), ethanol (that is, the mixing ratio of ethanol of 100 %) and a mixed fuel thereof (that is, the mixing ratio of ethanol more than 0 % and less than 100 %) as a fuel. Accordingly, in some cases a fuel is supplied which is different in the mixing ratio of ethanol from the last refueling. In such a case, the mixing ratio of alcohol after refueling is to be estimated in accordance with the following learning. In the case of the motorcycle 1, the mixing ratio of ethanol of the fuel is set at 22 % or more and 100 % or less for the purpose of practical use. Therefore, description will be made hereinafter, assuming that a range of variation of the mixing ratio of ethanol is 22 % or more and 100 % or less. It goes without saying, however, of course, that the lower limit value of the mixing ratio of ethanol may be not necessarily 22 %.

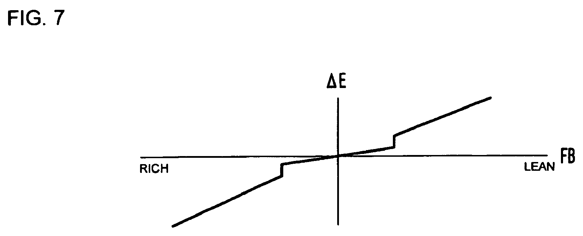

The learning of the mixing ratio of ethanol is performed in accordance with a calculation of an increase and decrease value ΔE of the mixing ratio on the basis of the $O_2$ feedback correction coefficient FB and addition of the increase and decrease value ΔE to a preceding learning value E. That is to say, it is arranged that the learning value of the mixing ratio E = the preceding learning value E + ΔE. ΔE may be of both positive and negative values. The increase and decrease value ΔE is a positive value when the $O_2$ feedback correction coefficient FB is larger than 1 (namely, in the case of the lean side) while it is a negative value when the $O_2$ feedback correction coefficient FB is smaller than 1 (namely, in the case of the rich side), as shown in Fig. 7. Accordingly, the learning value E of the mixing ratio increases in the case of the lean side while the learning value E of the mixing ratio decreases in the case of the rich side. Repetition of the learning allows the learning value E to converge on a fixed value (that is to say, an actual mixing ratio of ethanol).

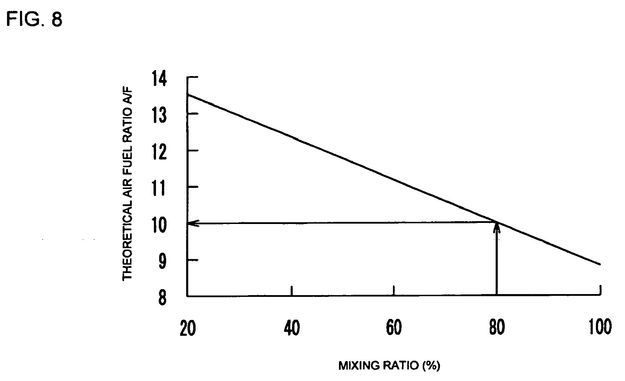

The process then goes to Step S13. In Step S13, a calculation part 203 calculates a theoretical air fuel ratio on the basis of the learning value E of the mixing ratio of ethanol. The storing unit 42 of the ECU 40 stores a relation between the mixing ratio of ethanol and the theoretical air fuel ratio (refer to Fig. 8). The calculation part 203 refers to the relation to calculate the theoretical air fuel ratio corresponding to the learning value E of the mixing ratio of ethanol.

Correction in accordance with the temperature of the engine enables more precise control although the theoretical air fuel ratio may be used as a target air fuel ratio. In the case of starting the vehicle from cold, for example, lowering the target air fuel ratio below the theoretical air fuel ratio (namely, achieving the rich state) allows an excellent drive performance to be achieved. Accordingly, a correction coefficient λ corresponding to the mixing ratio of ethanol and the temperature of the engine is introduced in the embodiment to arrange that the target air fuel ratio = the theoretical air fuel ratio × λ. A calculation method of the correction coefficient λ performed in Step S14 will be described as follows.

The storing unit 42 stores a value $\lambda_{E22, T1}$ of the correction coefficient λ in the case that the mixing ratio of ethanol is 22 % and the temperature of the engine is predetermined temperature T1 (identified as a "target λ low temperature (E22)" in Fig. 3 and such), a value $\lambda_{E22, T2}$ of the correction coefficient λ in the case that the mixing ratio of ethanol is 22 % and the temperature of the engine is predetermined temperature T2 (wherein T2 > T1) (identified as a "target λ high temperature (E22)" in Fig. 3 and such), a value $\lambda_{E100, T1}$ of the correction coefficient λ in the case that the mixing ratio of ethanol is 100 % and the temperature of the engine is the predetermined temperature T1 (identified as a "target λ low temperature (E100)" in Fig. 3 and such) and a value $\lambda_{E100, T2}$ of the correction coefficient λ in the case that the mixing ratio of ethanol is 100 % and the temperature of the engine is the predetermined temperature T2 (identified as a "target λ high temperature (E100)" in Fig. 3 and such).

A reflection coefficient calculation part 300 performs an interpolation calculation of a correction coefficient $\lambda_{E, T}$ corresponding to the learned mixing ratio of ethanol E and the detected temperature of the engine T on the basis of the correction coefficients $\lambda_{E22, T1}$, $\lambda_{E22, T2}$, $\lambda_{E100, T1}$, and $\lambda_{E100, T2}$.

(Method of interpolation calculation)

Now, an example will be described of the interpolation calculation, before describing a particular method of calculation of the correction coefficient $\lambda_{E, T}$. A linear interpolation calculation and a non-linear interpolation calculation will be described here as an example of the interpolation calculation.

-Linear interpolation calculation-

The linear interpolation calculation is a method of calculation of B3 by

$$B3 = B1 \times (1 - R) + B2 \times R$$

in calculating the target parameter B on the basis of the input parameter A, wherein B1 denotes a value of a target parameter B in the case that A1 denotes a value of an input parameter A, B2 denotes a value of the target parameter B in the case that A2 denotes a value of the input parameter A, B3 denotes a value of the target parameter B in the case that A3 denotes a value of the input parameter A and

$$\text{Reflection coefficient } R = (A3 - A1) / (A2 - A1).$$

-Non-linear interpolation calculation-

The non-linear interpolation calculation is a method of calculation of B3 by

$$B3 = B1 \times (1 - f(R)) + B2 \times f(R)$$

in calculating the target parameter B on the basis of the input parameter A, wherein B1 denotes a value of a target parameter B in the case that A1 denotes a value of an input parameter A, B2 denotes a value of the target parameter B in the case that A2 denotes a value of the input parameter A, B3 denotes a value of the target parameter B in the case that A3 denotes a value of the input parameter A,

$$R = (A3 - A1) / (A2 - A1),$$

and a reflection coefficient f (R) is a non-linear function of R.

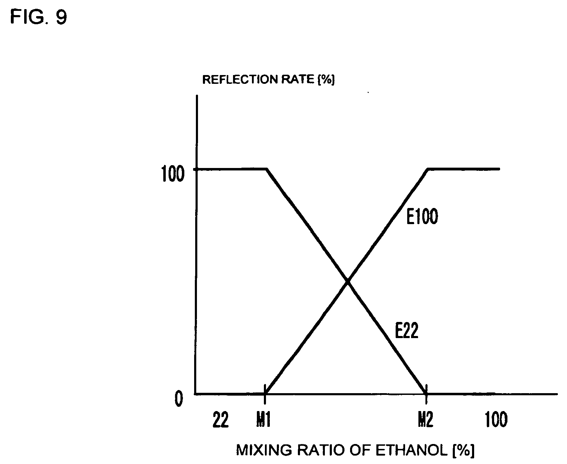

In the case that the mixing ratio of ethanol is assumed to be the input parameter and the correction coefficient is assumed to be the target parameter, for example, it may be possible to arrange that, as shown in Fig. 9, properly setting the reflection coefficient f(R) allows the correction coefficient for the mixing ratio of ethanol of 22 % to be used when the mixing ratio of ethanol is M1 % or less (wherein 22 < M1), the correction coefficients for the mixing ratio of ethanol of 22 % and that of 100 % to be used for performing the linear interpolation calculation when the mixing ratio of ethanol is more than M1 % and less than M2 % (wherein M1 < M2 < 100), and the correction coefficient for the mixing ratio of ethanol of 100 % to be used when the mixing ratio of ethanol is M2 % or more.

The above is an example of the interpolation calculation. Now will be described a method of calculating the correction coefficient $\lambda_{E, T}$. In Embodiment 1, first calculated is a correction coefficient $\lambda_{E22, T}$ in the case of the mixing ratio of ethanol of 22 % and the temperature of the engine of T by means of a first calculation part 301 of the reflection coefficient calculation part 300 on the basis of $\lambda_{E22, T1}$ and $\lambda_{E22, T2}$. In the case of performing the linear interpolation calculation, for example, carried out is a calculation of

$$\lambda_{E22, T} = \lambda_{E22, T1} \times (1 - R) + \lambda_{E22, T2} \times R$$

wherein the temperature of the engine is used as the input parameter, the correction coefficient is used as the target parameter and the reflection coefficient R = (T - T1) / (T2 - T1).

Similarly to the above, calculated is a correction coefficient $\lambda_{E100, T}$ in the case of the mixing ratio of ethanol of 100 % and the temperature of the engine of T by means of a second calculation part 302 on the basis of $\lambda_{E100, T1}$ and $\lambda_{E100, T2}$. In the case of performing the linear interpolation calculation, for example, carried out is a calculation of

$$\lambda_{E100, T} = \lambda_{E100, T1} \times (1 - R) + \lambda_{E100, T2} \times R$$

wherein the temperature of the engine is used as the input parameter, the correction coefficient is used as the target parameter and the reflection coefficient R = (T - T1) / (T2 - T1).

The correction coefficient $\lambda_{E, T}$ is then calculated by means of a third calculation part 303 on the basis of $\lambda_{E22, T}$ and $\lambda_{E100, T}$. In the case of performing the linear interpolation calculation, for example, carried out is a calculation of

$$\lambda_{E, T} = \lambda_{E22, T} \times (1 - R) + \lambda_{E100, T} \times R$$

wherein the mixing ratio of ethanol is used as the input parameter, the correction coefficient is used as the target parameter and the reflection coefficient R = (E - E22) / (E100 - E22).

In Embodiment 1, the interpolation calculation of the correction coefficient $\lambda_{E22, T}$ in the case of the mixing ratio of ethanol of 22 % and the temperature of the engine of T is first carried out, the interpolation calculation of the correction coefficient $\lambda_{E100, T}$ in the case of the mixing ratio of ethanol of 100 % and the temperature of the engine of T is carried out, and then, the interpolation calculation of the correction coefficient $\lambda_{E, T}$ on the basis of $\lambda_{E22, T}$ and $\lambda_{E100, T}$ is carried out, as described above. It may be also possible, however, to perform the interpolation calculation of the correction coefficient $\lambda_{E, T1}$ in the case of the mixing ratio of ethanol of E and the temperature of the engine of T1, to carry out the interpolation calculation of the correction coefficient $\lambda_{E, T2}$ in the case of the mixing ratio of ethanol of E and the temperature of the engine of T2 and to perform the interpolation calculation of the correction coefficient $\lambda_{E, T}$ on the basis of $\lambda_{E, T1}$ and $\lambda_{E, T2}$.

The process goes to Step S15 after the correction coefficient $\lambda_{E, T}$ is calculated as described above to calculate a target air fuel ratio by means of a multiplier unit 204. That is to say, carried out is a calculation of: the target air fuel ratio = the theoretical air fuel ratio $\times$ the correction coefficient $\lambda_{E, T}$.

-Method of calculation of adhesion correction coefficient and take-away correction coefficient-

As described above, in performing the adhesion and take-away calculation in Step S6 (refer to Fig. 4), used are an adhesion correction coefficient C and a take-away correction coefficient D. Now, described will be a method of calculation of the adhesion correction coefficient C and the take-away correction coefficient D. The method of calculation of the adhesion correction coefficient C and the take-away correction coefficient D is somewhat similar to the method of calculation of the correction coefficient $\lambda_{E, T}$.

The storing unit 42 of the ECU 40 stores an adhesion correction coefficient $C_{E22, T1}$ in the case that the mixing ratio of ethanol is 22 % and the temperature of the engine is predetermined temperature T1, an adhesion correction coefficient $C_{E22, T2}$ in the case that the mixing ratio of ethanol is 22 % and the temperature of the engine is predetermined temperature T2 (wherein T2 > T1), an adhesion correction coefficient $C_{E100, T1}$ in the case that the mixing ratio of ethanol is 100 % and the temperature of the engine is the predetermined temperature T1 and an adhesive correction coefficient $C_{E100, T2}$ in the case that the mixing ratio of ethanol is 100 % and the temperature of the engine is the predetermined temperature T2.

A reflection coefficient calculation part 401 performs an interpolation calculation of an adhesion correction coefficient $C_{E, T}$ corresponding to the learned mixing ratio of ethanol E and the detected temperature of the engine T on the basis of the adhesion correction coefficients $C_{E22, T1}$, $C_{E22, T2}$, $C_{E100, T1}$, and $C_{E100, T2}$. A particular method of the interpolation calculation is similar to the above-mentioned method. That is to say, the interpolation calculation of the adhesion correction coefficient $C_{E22, T}$ in the case of the mixing ratio of ethanol of 22 % and the temperature of the engine of T is first carried out on the basis of $C_{E22, T1}$ and $C_{E22, T2}$. The interpolation calculation of the adhesion correction coefficient $C_{E100, T}$ in the case of the mixing ratio of ethanol of 100 % and the temperature of the engine of T is then carried out on the basis of $C_{E100, T1}$ and $C_{E100, T2}$. The adhesion correction coefficient $C_{E, T}$ in the case of the mixing ratio of ethanol of E % and the temperature of the engine of T is finally calculated by the interpolation calculation on the basis of $C_{E22, T}$ and $C_{E100, T}$. Following the above, using a multiplier unit 403 to multiply a predetermined basic adhesion ratio, which has been preset, by the adhesion correction coefficient $C_{E, T}$ allows a final adhesion correction coefficient C to be calculated. The interpolation calculation may be the linear interpolation calculation or the non-linear interpolation calculation.

The storing unit 42 of the ECU 40 stores a take-away correction coefficient $D_{E22, T1}$ in the case that the mixing ratio of ethanol is 22 % and the temperature of the engine is predetermined temperature T1, a take-away correction coefficient $D_{E22, T2}$ in the case that the mixing ratio of ethanol is 22 % and the temperature of the engine is predetermined temperature T2 (wherein T2 > T1), a take-away correction coefficient $D_{E100, T1}$ in the case that the mixing ratio of ethanol is 100 % and the temperature of the engine is the predetermined temperature T1 and a take-away correction coefficient $D_{E100, T2}$ in the case that the mixing ratio of ethanol is 100 % and the temperature of the engine is the predetermined temperature T2.

A reflection coefficient calculation part 402 performs an interpolation calculation of a take-away correction coefficient $D_{E, T}$ corresponding to the learned mixing ratio of ethanol E and the detected temperature of the engine T on the basis of the take-away correction coefficients $D_{E22, T1}$, $D_{E22, T2}$, $D_{E100, T1}$, and $D_{E100, T2}$. A particular method of the interpolation calculation is similar to the above-mentioned method. Following the above, using a multiplier unit 404 to multiply a predetermined basic take-away ratio, which has been preset, by the take-away correction coefficient $D_{E, T}$ allows a final take-away correction coefficient D to be calculated.

-Calculation of effective injection time of fuel injection valve-

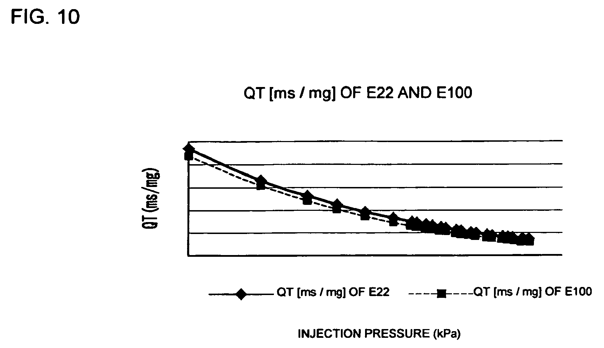

Now, described will be a calculation of effective injection time of the fuel injection valve 31 in Step S7 (refer to Fig. 4). The storing unit 42 of the ECU 40 stores a QT characteristic in the case that the mixing ratio of ethanol is 22 % and a QT characteristic in the case that the mixing ratio of ethanol is 100 %. In the above context, QT denotes the injection time / the injection mass. In detail, QT means effective injection time of the fuel injection valve, which is necessary to inject a fuel per unit mass. The QT characteristic means a change in QT in accordance with a change in injection pressure. Fig. 10 is an example of a diagram showing the QT characteristic (referred to as a QT characteristic diagram, hereinafter) wherein the horizontal axis shows the injection pressure and the vertical axis shows QT.

A reflection coefficient calculation part 501 shown in Fig. 3 performs an interpolation calculation of $QT_E$ corresponding to the learned mixing ratio of ethanol E on the basis of $QT_{E22}$ in the case of the mixing ratio of ethanol of 22 % and $QT_{E100}$ in the case of the mixing ratio of ethanol of 100 %. Concretely, $QT_{E22}$ and $QT_{E100}$ corresponding to the injection pressure of the fuel injection valve 31 are calculated first on the basis of the QT characteristic shown in Fig. 10. The interpolation calculation of $QT_E$ is then carried out on the basis of $QT_{E22}$ and $QT_{E100}$.

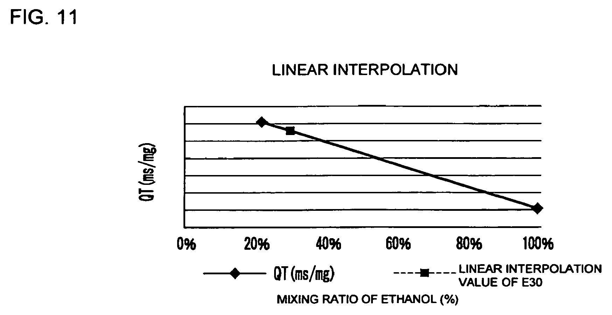

The interpolation calculation performed may be a linear interpolation calculation as shown in Fig. 11, for example. In this case, $QT_E = [(QT_{E22} - QT_{E100}) / (E22 - E100)] \times [E + (E22 \times QT_{E100} - E100 \times QT_{E22}) / (QT_{E22} - QT_{E100})]$ wherein the mixing ratio of alcohol is the input parameter and QT is the target parameter. In the above formula, each of E22 and E100 denotes a mixing ratio of ethanol and E22 = 0.22 and E100 = 1.

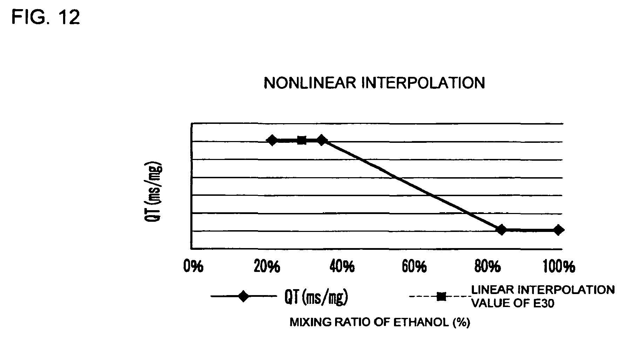

Moreover, the interpolation calculation performed may be a non-linear interpolation calculation as shown in Fig. 12, for example. In this case, the following is assumed:

$$(1) \quad QT_E = QT_{E22}$$

in the case that the learned value E is 22 % or more and 35 % or less,

$$(2) \quad QT_E = [(QT_{E22} - QT_{E100}) / (E35 - E85)] \times [E + (E35 \times QT_{E100} - E85 \times QT_{E22}) / (QT_{E22} - QT_{E100})]$$

in the case that the learned value E is more than 35 % and less than 85 %, and

$$(3) \quad QT_E = QT_{E100}$$

in the case that the learned value E is 85 % or more and 100 % or less wherein E35 = 0.35 and E85 = 0.85. The fuel whose mixing ratio of alcohol is less than 22 % is assumed not to be supplied in Embodiment 1, as described above.

After such calculation of $QT_E$, the calculation part 105 multiplies the necessary injection mass by $QT_E$ to calculate the effective injection time of the fuel injection valve 31, as described above.

-Calculation of ineffective injection time of fuel injection valve-

The storing unit 42 of the ECU 40 stores an ineffective injection time characteristic in the case that the mixing ratio of ethanol is 22 % and an ineffective injection time characteristic in the case that the mixing ratio of ethanol is 100 %. A reflection coefficient calculation part 502 performs an interpolation calculation of ineffective injection time corresponding to the learned mixing ratio of ethanol E on the basis of the ineffective injection time in the case of the mixing ratio of ethanol of 22 % and the ineffective injection time in the case of the mixing ratio of ethanol of 100 %. The interpolation calculation may be the linear interpolation calculation or the non-linear interpolation calculation.

After the ineffective injection time corresponding to the mixing ratio of ethanol E is calculated, the adder unit 106 adds the effective injection time and the ineffective injection time to calculate the drive time for the fuel injection valve 31, as described above.

«Advantage of Embodiment 1»

As described above, learning of the mixing ratio of ethanol is carried out by means of the calculation part 202 in Embodiment 1. This allows the mixing ratio of ethanol of the fuel to be known without providing any sensor for detecting the concentration of ethanol.

Further, in accordance with Embodiment 1, the correction coefficient $\lambda_{E, T}$ on the basis of the mixing ratio of ethanol and the temperature of the engine is calculated to multiply the theoretical air fuel ratio by the correction coefficient $\lambda_{E, T}$ for calculating the target air fuel ratio. This allows highly precise fuel injection control in accordance with the mixing ratio of ethanol and the temperature of the engine to be achieved.

Moreover, the correction coefficient $\lambda_{E, T}$ is not directly obtained from a large number of maps of the correction coefficient $\lambda_{E, T}$, the maps being stored in advance, but calculated by the interpolation calculation in Embodiment 1. This obviates the requirement for advance preparation of a large number of maps, and thereby, no excessive complication of the structure of the control device to occur. Therefore, in accordance with Embodiment 1, a fuel injection control device capable of supplying the engine 4 with a proper amount of fuel, even in the case of a change in mixing ratio of ethanol, can be put into practice without excessive complication of the structure.

Furthermore, in accordance with Embodiment 1, the mixing ratio of ethanol is taken into consideration when carrying out a calculation of the adhesion correction coefficient C of the fuel, a calculation of the take-away correction coefficient D, a calculation of QT and a calculation of the ineffective injection time, and then, in carrying out correction of the fuel injection amount. This allows precise fuel injection control to be performed in accordance with the mixing ratio of ethanol.

In addition, the interpolation calculation is properly used not only in calculating the target air fuel ratio but also in the respective calculations in accordance with Embodiment 1. That is to say, the interpolation calculation is also used in calculating the adhesion correction coefficient C, the take-away correction coefficient D, QT and the ineffective injection time. Accordingly, it is not required to prepare a large number of maps relating to the above calculations in advance. From this point of view, complication of the structure of the control device can be avoided.

In accordance with Embodiment 1, the above-mentioned advantage can be achieved. On the other hand, however, as a result of a diligent study by the inventor of the application, it has been found that the following problem occurs when the fuel injection is further highly controlled..

Embodiment 1 is based on the feedback control that the $O_2$ feedback correction coefficient is used to adjust the fuel injection amount. In Embodiment 1, correction is carried out on the basis of a learned value of the mixing ratio of ethanol. The $O_2$ feedback correction coefficient is used also in learning the mixing ratio of ethanol. Now, considered is a case that the fuel having the mixing ratio of ethanol of 22 % (referred to as E22, hereinafter) is supplied after the fuel having the mixing ratio of ethanol of 100 % (referred to as E100, hereinafter) is used, for example. In this case, the learned value E of the mixing ratio of ethanol gradually varies from E100 to E22.

The fuel of E22 is larger in theoretical air fuel ratio than the fuel of E100. Accordingly, injecting the same amount of fuel of E22 as the fuel of E100 causes the air fuel ratio to be rich. In view of the above, the $O_2$ feedback correction coefficient is made small in accordance with the above-mentioned fuel injection control in order to obtain a proper value of the air fuel ratio.

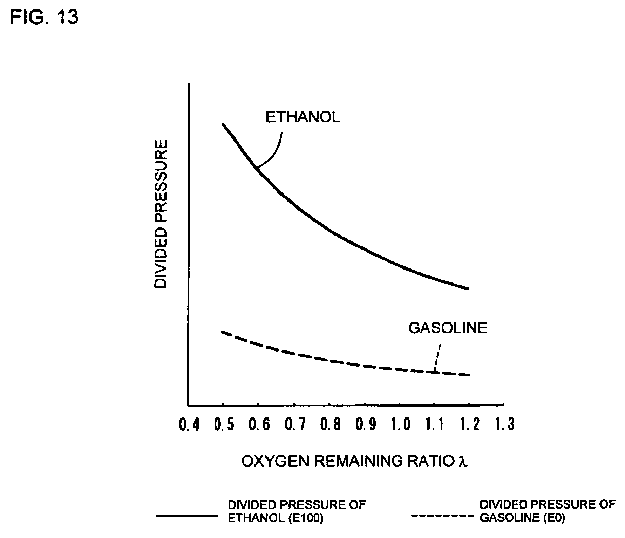

As shown in Fig. 13, however, the divided or partial pressure of the fuel of the intake pressure (strictly speaking, the pressure of the mixed air formed from the intake air and the fuel) in the case of the fuel of E100 (= an ethanol fuel) is nearly four times as high as that of the fuel of E0 (= a gasoline fuel). This is because ethanol has a higher theoretical air fuel ratio and greater substance mass (molar number) than gasoline. Accordingly, the divided or partial pressure of the fuel of the intake pressure for gasoline or E22 is lower than that of the fuel of E100 while the divided pressure of the intake air of the former fuel is higher than that of the fuel of E100, so that the mass of the intake air increases. This results in a slight change of the air fuel ratio to the lean side. In accordance with the fuel injection control, the $O_2$ feedback correction coefficient is a little larger in the case where the divided pressure of ethanol has an influence when compared to the case that the divided pressure of ethanol has no influence. Fig. 13 is a diagram showing a difference in divided (partial) pressure in accordance with fuel composition in the case that the whole fuel is evaporated in a fully open area.

On the other hand, the increase and decrease value ΔE of the learned value E of the mixing ratio of ethanol depends on the $O_2$ feedback correction coefficient, as described above. The increase and decrease value ΔE of the mixing ratio of ethanol increases in accordance with an increase of the $O_2$ feedback correction coefficient. Accordingly, the increase and decrease value ΔE of the mixing ratio of ethanol becomes larger than its original value when the $O_2$ feedback correction coefficient becomes larger than its original value. This causes the learned value E of the mixing ratio of ethanol to be converged to a value a little bit larger than an actual mixing ratio.

In Embodiments 2 and 3 in the following description, correction is carried out while taking account of the divided pressure of the mixed fuel varying in accordance with a change in mixing ratio of ethanol.

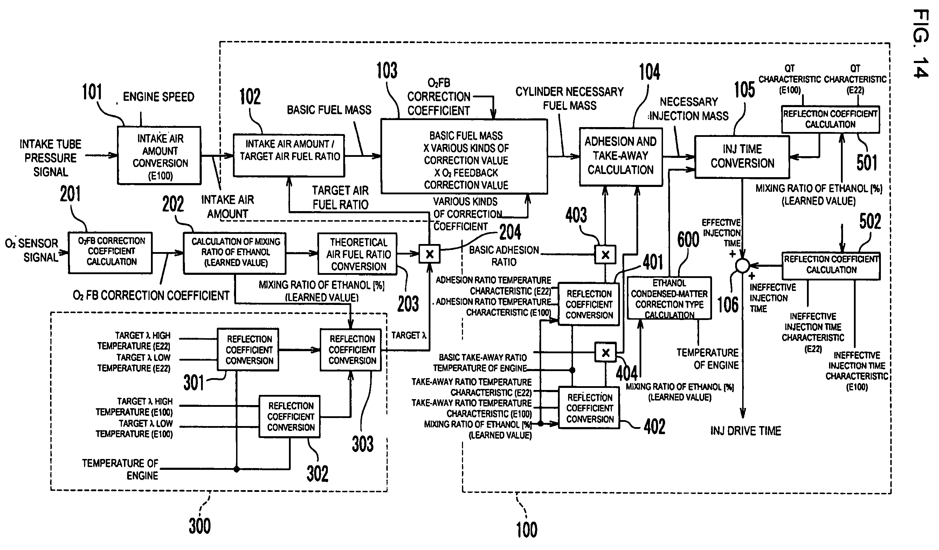

In Embodiment 2, an ethanol condensed-matter correction type calculation considering divided (partial) pressure of ethanol is carried out in a calculation part 600 before the calculation part 105 calculates the effective injection time and $QT_E$ obtained by calculation by means of the reflection coefficient calculation part 501 (namely, the injection time / the injection mass) is multiplied by an ethanol condensed-matter correction coefficient $E_{corr.}$ in calculating the effective injection time, as shown in Fig. 14. That is to say, the amount of the fuel injected from the fuel injection valve 31 is arranged to be corrected, taking account of the divided pressure of ethanol. The other parts are similar to the case of Embodiment 1, and therefore, the parts similar to those of Embodiment 1 are omitted from description.

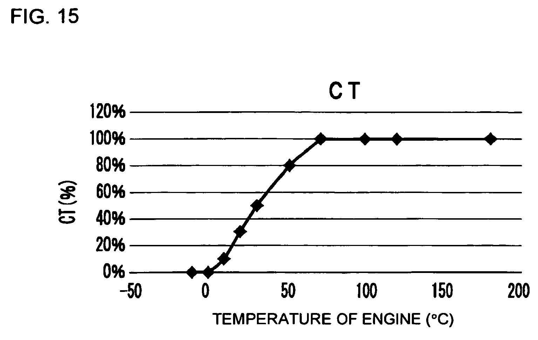

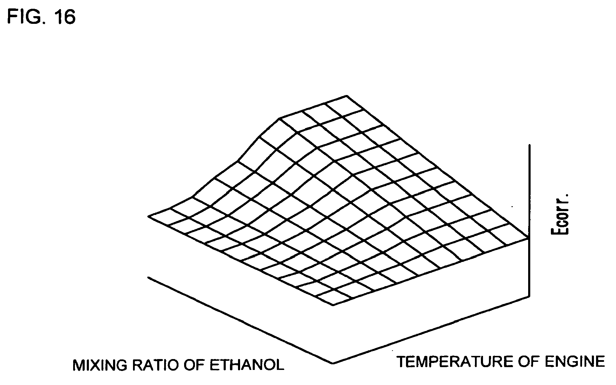

The ethanol condensed-matter correction coefficient $E_{corr.}$ is calculated on the basis of the mixing ratio of ethanol E and the temperature of the engine, in particular, calculated by a formula of: $E_{corr.} = A + CT \times B \times (1 - E)$, wherein A denotes a constant relating to a system of the $O_2$ feedback control, B denotes a constant relating to the divided pressure of ethanol and CT denotes a constant relating to the temperature of the engine. The storing unit 42 of the ECU 40 stores information relating to the constants A, B and CT in advance. Fig. 15 is a diagram showing an example of a relation between the temperature of the engine and the constant CT. The calculation part 600 calculates the constants A, B and CT on the basis of the temperature of the engine and calculates the ethanol condensed-matter correction coefficient $E_{corr.}$ on the basis of the above formula. The calculation part 600 may carry out a calculation based on the formula. It may be also possible that the storing unit 42 stores a map defining the relationship between the temperature of the engine, the mixing ratio of ethanol and the ethanol condensed-matter correction coefficient $E_{corr.}$ (refer to Fig. 16) and uses the map for obtaining the ethanol condensed-matter correction coefficient $E_{corr.}$ on the basis of the learned value E of the mixing ratio of ethanol and the detected temperature of the engine.

As described above, correction is carried out taking account of the divided (partial) pressure of ethanol in Embodiment 2. Accordingly, learning of the mixing ratio of ethanol progresses smoothly and the learned value is converged to a value more approximate to the actual mixing ratio. This allows the precision in learning to be improved. In accordance with Embodiment 2, the precision in learning the mixing ratio of ethanol is improved, so that the fuel injection control can be further highly advanced.

In Embodiment 2, the correction used is a simple formula of $E_{corr.} = A + CT \times B \times (1 - E)$. This allows the highly advanced fuel injection control to be achieved without excessive complication of the structure.

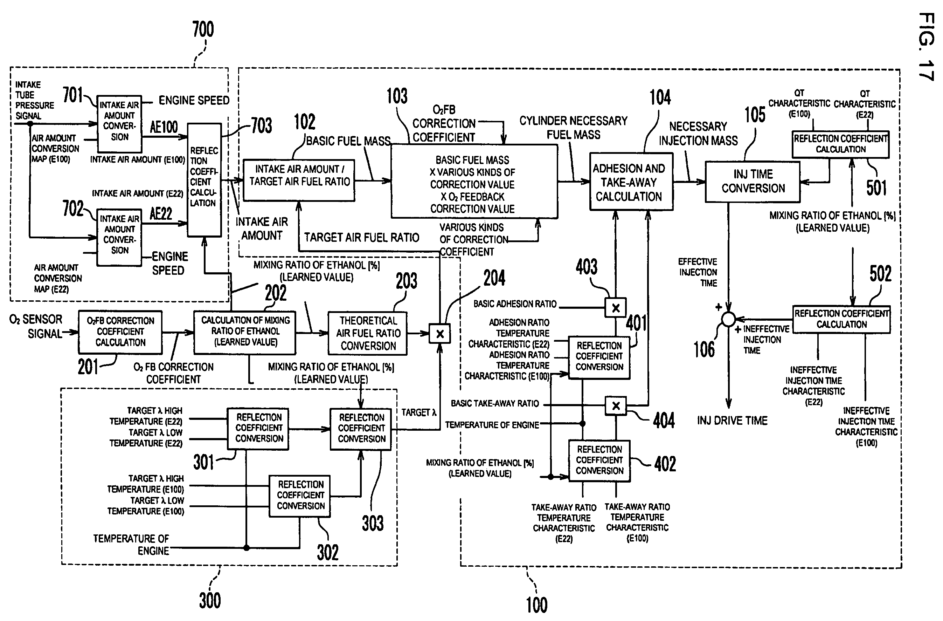

In Embodiment 3, a calculation considering the divided (partial) pressure of ethanol is carried out in calculating the amount of the intake air in an operation part 700, as shown in Fig. 17. The other parts are similar to the case of Embodiment 1, and therefore, the parts similar to those of Embodiment 1 will not be described again.

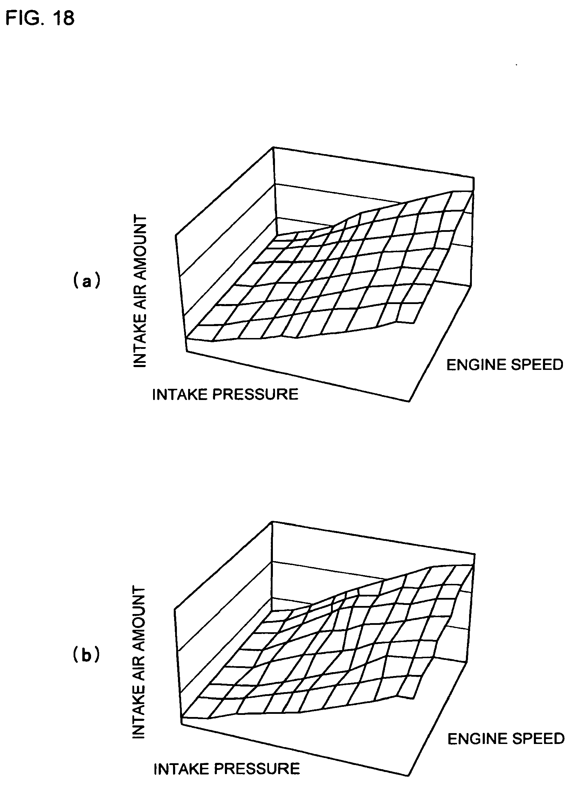

The storing unit 42 of the ECU 40 stores an intake air amount conversion map for the case of E100 (refer to Fig. 18 (a)) and an intake air amount conversion map for the case of E22 (refer to Fig. 18(b)). In Embodiment 3, the intake pressure is detected by means of the pressure sensor 54, the engine speed is detected by means of the speed sensor 51, and then, the intake air amount $A_{E100}$ in the case of E100 and the intake air amount $A_{E22}$ in the case of E22, which correspond to the detected intake pressure and engine speed, are calculated on the basis of both intake air amount conversion maps by means of intake air amount calculation parts 701 and 702. In Embodiment 3, using the two intake air amount conversion maps allows the divided pressure of ethanol to be sufficiently taken into consideration. A reflection coefficient calculation part 703 then carries out an interpolation calculation of the intake air amount $A_E$ corresponding to the learned mixing ratio of ethanol E on the basis of the intake air amount $A_{E100}$ and the intake air amount $A_{E22}$. Following the above, the intake air amount $A_E$ so calculated is used to perform a process similar to Embodiment 1 by means of the injection amount calculation part 100.

The correction considering the divided pressure of ethanol is arranged to be carried out also in Embodiment 3, as described above. Accordingly, learning of the mixing ratio of ethanol progresses smoothly and the learned value is converged to a value more approximate to the actual mixing ratio. This allows the precision in learning to be improved. The fuel injection control can be further highly advanced also in Embodiment 3.

In Embodiment 3, plural conversion maps are used in calculating the intake air amount. Preparation of a large number of maps, however, is not required since the interpolation calculation of the intake air amount $A_E$ corresponding to the learned mixing ratio of ethanol E is carried out. This allows the highly advanced fuel injection control to be achieved without excessive complication of the structure.

The alcohol included in the fuel of the engine 4 is ethanol in the embodiments described above. The alcohol included in the fuel, however, is not limited to ethanol but may be another kind of alcohol such as methanol.

In the specification, the "temperature sensor for detecting the temperature of the internal combustion engine" may be a sensor for directly detecting the temperature of the internal combustion engine per se or may be a sensor for indirectly detecting the temperature of the internal combustion engine by, for example, detecting the temperature of cooling water in the case that the internal combustion engine is of the water cooled type.

The "air fuel ratio sensor" may be a sensor for detecting the air fuel ratio per se or may be a sensor for detecting a parameter necessary to calculate the air fuel ratio (existence of oxygen, concentration of oxygen and such, for example).

The invention is useful for a fuel injection control device for an internal combustion engine and a straddle type vehicle comprising the same.

[Description of the Reference Numerals and Signs]

    1: MOTORCYCLE (STRADDLE TYPE VEHICLE)
    4: ENGINE (INTERNAL COMBUSTION ENGINE)
    26: INTAKE PASSAGE
    27: EXHAUST PASSAGE
    31: FUEL INJECTION VALVE
    40: ECU (CONTROL DEVICE)
    51: SPEED SENSOR
    52: TEMPERATURE SENSOR
    54: PRESSURE SENSOR (INTAKE PRESSURE SENSOR)
    56: $O_2$ SENSOR (AIR FUEL RATIO SENSOR)
    100: INJECTION AMOUNT CALCULATION PART (INJECTION AMOUNT CALCULATION MEANS)
    101: INTAKE AIR AMOUNT CALCULATION PART (INTAKE AIR AMOUNT CALCULATION MEANS)
    103: CALCULATION PART (BASIC CORRECTION MEANS)
    104: CALCULATION PART (ADHESION AND TAKE-AWAY CALCULATION MEANS)
    105: CALCULATION PART (INJECTION TIME CALCULATION MEANS)
    106: ADDER UNIT (INJECTION TIME CALCULATION MEANS)
    201: CALCULATION PART (AIR FUEL RATIO FEEDBACK CORRECTION COEFFICIENT CALCULATION MEANS)
    202: CALCULATION PART (MIXING RATIO CALCULATION MEANS)
    203: CALCULATION PART (THEORETICAL AIR FUEL RATIO CALCULATION MEANS)
    204: ADDER UNIT (TARGET AIR FUEL RATIO CALCULATION MEANS)
    300: REFLECTION COEFFICIENT CALCULATION PART (REFLECTION COEFFICIENT CALCULATION MEANS)
    401: REFLECTION COEFFICIENT CALCULATION PART (ADHESION AND TAKE-AWAY REFLECTION COEFFICIENT CALCULATION MEANS)
    402: REFLECTION COEFFICIENT CALCULATION PART (ADHESION AND TAKE-AWAY REFLECTION COEFFICIENT CALCULATION MEANS)
    501: REFLECTION COEFFICIENT CALCULATION PART (REFLECTION COEFFICIENT CALCULATION MEANS FOR INJECTION TIME / INJECTION MASS CHARACTERISTIC)
    502: REFLECTION COEFFICIENT CALCULATION PART (REFLECTION COEFFICIENT CALCULATION MEANS FOR INEFFECTIVE INJECTION TIME)
    600: CALCULATION PART (INJECTION AMOUNT CORRECTION MEANS)
    700: CALCULATION PART (INTAKE AIR AMOUNT CORRECTION MEANS)
    703: REFLECTION COEFFICIENT CALCULATION PART (REFLECTION COEFFICIENT CALCULATION MEANS)

**Claims**

1. A fuel injection control device (40) for an internal combustion engine (4) including a fuel injection valve (31) capable of injecting a mixed fuel formed by mixing gasoline and alcohol, an intake passage (26) and an exhaust passage (27), the fuel injection control device (40) comprising:

    an intake pressure sensor (54) for detecting intake pressure in the intake passage (26);
    an air fuel ratio sensor (56) for location in the exhaust passage (27);
    a temperature sensor (52) for detecting the temperature of the internal combustion engine (4);
    a speed sensor (51) for detecting the speed of the internal combustion engine (4); and
    a control unit (40) for controlling the fuel injection valve (31), wherein
    the control unit (40) includes:

        an air fuel ratio feedback correction coefficient calculation means (201) for calculating an air fuel ratio feedback correction coefficient on the basis of a value detected by the air fuel ratio sensor (56);
        a mixing ratio calculation means (202) for calculating a mixing ratio of alcohol of a mixed fuel on the basis of the air fuel ratio feedback correction coefficient;

a theoretical air fuel ratio calculation means (203) for calculating a theoretical air fuel ratio of a mixed fuel having the mixing ratio of alcohol calculated by the mixing ratio calculation means (202);

a reflection coefficient calculation means (300) for storing a plurality of pre-set values of air fuel ratio correction coefficient, each pre-set value having been determined on the basis of a particular predetermined mixing ratio of alcohol and a particular predetermined engine temperature and using the pre-set values for performing an interpolation calculation of a value of an air fuel ratio correction coefficient reflecting the mixing ratio of alcohol calculated by the mixing ratio calculation means (202) and the temperature of the internal combustion engine detected by the temperature sensor (52);

a target air fuel ratio calculation means (204) for calculating a target air fuel ratio by means of the theoretical air fuel ratio on the basis of the value of the air fuel ratio correction coefficient calculated by the reflection coefficient calculation means (300);

an intake air amount calculation means (101) for calculating an intake air amount in the intake passage (26) on the basis of the intake pressure detected by the intake pressure sensor (56) and the speed of the internal combustion engine detected by the speed sensor (51); and

an injection amount calculating means (100) for calculating a basic injection amount for the fuel injection valve (31) on the basis of the intake air amount and the target air fuel ratio and for calculating an actual injection amount for the fuel injection valve (31) on the basis of the basic injection amount by means of the air fuel ratio feedback correction coefficient.

2. The fuel injection control device (40) for an internal combustion engine (4) according to Claim 1, wherein the control unit (40) includes a correction means for carrying out correction taking into account divided (partial) pressure of the mixed fuel, the divided pressure varying in accordance with the mixing ratio of alcohol.

3. The fuel injection control device (40) for an internal combustion engine (4) according to Claim 2, wherein the correction means comprises an injection amount correction means for correcting an actual injection amount calculated by the injection amount calculation means (100) on the basis of the engine temperature detected by the temperature sensor (52) and the mixing ratio of alcohol calculated by the mixing ratio calculation means (202).

4. The fuel injection control device (40) for an internal combustion engine (4) according to Claim 2 or 3, wherein the correction means comprises an intake air amount correction means for calculating the intake air amount in the intake passage (26) on the basis of the speed of the internal combustion engine (4) detected by the speed sensor (51), the intake pressure detected by the intake pressure sensor (54) and the mixing ratio of alcohol calculated by the mixing ratio calculation means (202).

5. The fuel injection control device (40) for an internal combustion engine (4) according to Claim 4, wherein the intake air amount correction means is a reflection coefficient calculation means for storing at least a first intake air amount conversion map for calculating the intake air amount on the basis of the speed of the internal combustion engine and the intake pressure, the first intake air amount conversion map being set for a first mixing ratio of alcohol, and a second intake air amount conversion map set for a second mixing ratio of alcohol, for calculating a first intake air amount on the basis of the first intake air amount conversion map, the first intake air amount being the intake air amount in the case that the mixing ratio of alcohol is the first mixing ratio of alcohol, by means of the speed of the internal combustion engine detected by the speed sensor (51) and the intake pressure detected by the intake pressure sensor (54) and calculating a second intake air amount on the basis of the second intake air amount conversion map, the second intake air amount being the intake air amount in the case that the mixing ratio of alcohol is the second mixing ratio of alcohol, and

performing an interpolation calculation of a value of the intake air amount in accordance with the mixing ratio of alcohol calculated by means of the mixing ratio calculation means (202) on the basis of at least the first intake air amount and the second intake air amount.

6. The fuel injection control device (40) for an internal combustion engine (4) according to any preceding Claim, wherein the reflection coefficient calculation means (300)

stores a first coefficient value B1 and a second coefficient value B2, the first coefficient value B1 being a value of the air fuel ratio correction coefficient in the case that the mixing ratio of alcohol is a predetermined mixing ratio A1, the second coefficient value B2 being a value of the air fuel ratio correction coefficient in the case that the mixing ratio of alcohol is a predetermined mixing ratio A2, or obtains the first coefficient value B1 and the second coefficient value B2 by a calculation and

obtains a third coefficient value B3 by a formula of:

$$B3 = B1 \times (1 - R) + B2 \times R$$

wherein

Reflection Coefficient R = (A3 - A1) / (A2 - A1) and
the third coefficient value B3 is a value of the air fuel ratio correction coefficient corresponding to a value A3
wherein

A3 denotes a mixing ratio of alcohol calculated by means of the mixing ratio calculation means (202).

7. The fuel injection control device (40) for an internal combustion engine (4) according to any preceding Claim, wherein the reflection coefficient calculation means (300)
stores a first coefficient value B1 and a second coefficient value B2, the first coefficient value B1 being a value of the air fuel ratio correction coefficient in the case that the mixing ratio of alcohol is a predetermined mixing ratio A1, the second coefficient value B2 being a value of the air fuel ratio correction coefficient in the case that the mixing ratio of alcohol is a predetermined mixing ratio A2, or obtains the first coefficient value B1 and the second coefficient value B2 by a calculation and
obtains a third coefficient value B3 by a formula of:

$$B3 = B1 \times (1 - f(R)) + B2 \times f(R)$$

wherein

$$R = (A3 - A1) / (A2 - A1),$$

a reflection coefficient f(R) is a non-linear function relating to the reflection coefficient f(R) and
the third coefficient value B3 is a value of the air fuel ratio correction coefficient corresponding to a value A3
wherein

A3 denotes a mixing ratio of alcohol calculated by means of the mixing ratio calculation means (202).

8. The fuel injection control device (40) of an internal combustion engine (4) in accordance with any preceding Claim, wherein
the reflection coefficient calculation means (300)
stores a first coefficient value D1 and a second coefficient value D2, the first coefficient value D1 being a value of the air fuel ratio correction coefficient in the case that the temperature of the internal combustion engine is a predetermined first temperature C1, the second coefficient value D2 being a value of the air fuel ratio correction coefficient in the case that the temperature of the internal combustion engine being a predetermined second temperature C2, or obtains the first coefficient value D1 and the second coefficient value D2 by a calculation and
obtains a third coefficient value D3 by a formula of:

$$D3 = D1 \times (1 - R) + D2 \times R$$

wherein

Reflection Coefficient R = (C3 - C1) / (C2 - C1) and
the third coefficient value D3 is a value of the air fuel ratio correction coefficient corresponding to a value C3
wherein

C3 denotes a third temperature of the temperature of the internal combustion engine detected by means of the temperature sensor (52).

9. The fuel injection control device (40) of an internal combustion engine (4) according to any preceding Claim, wherein

the reflection coefficient calculation means (300)
stores a first coefficient value D1 and a second coefficient value D2, the first coefficient value D1 being a value of the air fuel ratio correction coefficient in the case that the temperature of the internal combustion engine is a predetermined first temperature C1, the second coefficient value D2 being a value of the air fuel ratio correction coefficient in the case that the temperature of the internal combustion engine being a predetermined second temperature C2, or obtains the first coefficient value D1 and the second coefficient value D2 by a calculation and obtains a third coefficient value D3 by a formula of:

$$D3 = D1 \times (1 - f(R)) + D2 \times f(R)$$

wherein

$$R = (C3 - C1) / (C2 - C1),$$

the reflection coefficient f (R) is a non-linear function relating to the reflection coefficient f(R) and the third coefficient value D3 is a value of the air fuel ratio correction coefficient corresponding to a value C3 wherein

C3 denotes a third temperature of the temperature of the internal combustion engine detected by means of the temperature sensor (52).

10. The fuel injection control device (40) of an internal combustion engine (4) according to any preceding Claim, wherein the injection amount calculation means (100) includes:

a basic correction means for using the air fuel ratio feedback correction coefficient to calculate a necessary injection amount for the fuel injection valve (31) on the basis of the basic injection amount;
an adhesion and take-away reflection coefficient calculation means for storing plural pre-set values of a correction coefficient relating to adhesion of a fuel in the intake passage or to take-away of the fuel adhered to the intake passage, the correction coefficient being determined on the basis of the mixing ratio of alcohol and the temperature of the internal combustion engine, and using the pre-set values of the correction coefficient to perform an interpolation calculation of a value of a correction coefficient reflecting the mixing ratio of alcohol calculated by the mixing ratio calculation means and the temperature of the internal combustion engine detected by the temperature sensor (52) ; and
an adhesion and take-away calculation means for using the correction coefficient calculated by means of the adhesion and take-away reflection coefficient calculation means to carry out correction for the necessary injection amount calculated by means of the basic correction means.

11. The fuel injection control device (40) for an internal combustion engine (4) according to any preceding Claim, wherein the injection amount calculation means (100) includes:

a basic correction means for using the air fuel ratio feedback correction coefficient to calculate a necessary injection amount for the fuel injection valve on the basis of the basic injection amount;
a reflection coefficient calculation means for a characteristic of the injection time / the injection mass for storing plural pre-set values of a correction coefficient relating to injection pressure of the fuel injection valve (31) and relating to a characteristic of the injection time / the injection mass, the correction coefficient being determined on the basis of the mixing ratio of alcohol, and using the pre-set values of the correction coefficient to perform an interpolation calculation of a value of a correction coefficient reflecting the mixing ratio of alcohol calculated by means of the mixing ratio calculation means (202); and
an injection time calculation means for using the correction coefficient calculated by means of the reflection coefficient calculation means for a characteristic of the injection time / the injection mass to correct a necessary injection amount and to calculate injection time of the fuel injection valve on the basis of the corrected necessary injection amount.

12. The fuel injection control device (40) of an internal combustion engine (4) according to any preceding Claim, wherein the injection amount calculation means (100) includes:

a basic correction means for using the air fuel ratio feedback correction coefficient to calculate a necessary injection amount from the fuel injection valve (31) on the basis of the basic injection amount;

a reflection coefficient calculation means for ineffective injection time for storing plural pre-set values of a correction coefficient relating to ineffective injection time of the fuel injection valve (31), the correction coefficient being determined on the basis of the mixing ratio of alcohol, and using the pre-set values of the correction coefficient to perform an interpolation calculation of a value of a correction coefficient reflecting the mixing ratio of alcohol calculated by means of the mixing ratio calculation means (202); and

an injection time calculation means for using the correction coefficient calculated by means of the reflection coefficient calculation means for ineffective injection time to correct a necessary injection amount and to calculate injection time of the fuel injection valve (31) on the basis of the corrected necessary injection amount.

13. An engine (4) comprising the fuel injection control device (40) of any preceding claim.

14. A straddle type vehicle (1) comprising the fuel injection control device (40) for an internal combustion engine (4) according to any one of Claims 1 to 12.

15. A fuel injection control method for an internal combustion engine including a fuel injection valve capable of injecting a mixed fuel formed by mixing gasoline and alcohol, an intake passage and an exhaust passage, the fuel injection control method comprising:

(a) calculating an air fuel ratio feedback correction coefficient on the basis of a value detected by an air fuel ratio sensor provided in the exhaust passage;

(b) calculating a mixing ratio of alcohol of a mixed fuel on the basis of the air fuel ratio feedback correction coefficient calculated in step(a);

(c) calculating a theoretical air fuel ratio of a mixed fuel having the mixing ratio of alcohol calculated in step (b) ;

(d) storing a plurality of pre-set value of fuel ratio correction coefficient, the pre-set value having been determined on the basis of a particular mixing ratio of alcohol and a particular temperature, using the pre-set values to perform an interpolation calculation of a value of an air fuel ratio correction coefficient reflecting the mixing ratio of alcohol calculated in step (b) and the temperature of the internal combustion engine detected by a temperature sensor;

(e) calculating a target air fuel ratio by means of the theoretical air fuel ratio on the basis of the value of the air fuel ratio correction coefficient calculated in step (d) ;

(f) calculating an intake air amount in the intake passage on the basis of the intake pressure detected by an intake pressure sensor and the speed of the internal combustion engine detected by a speed sensor; and

(g) calculating a basic injection amount for the fuel injection valve on the basis of the intake air amount and the target air fuel ratio and calculating an actual injection amount for the fuel injection valve on the basis of the basic injection amount by means of the air fuel ration feedback correction coefficient.

**Patentansprüche**

1. Kraftstoff-Einspritzungssteuervorrichtung (40) für eine Verbrennungskraftmaschine (4), die ein Kraftstoff-Einspritzventil (31), das dazu in der Lage ist, einen gemischten Kraftstoff einzuspritzen, der durch das Mischen von Benzin und Alkohol gebildet wird, einen Ansaugdurchgang (26) und einen Abgasdurchgang (27) einschließt, wobei die Kraftstoff-Einspritzungssteuervorrichtung (40) Folgendes umfasst:

einen Ansaugdrucksensor (54) zum Erfassen eines Ansaugdrucks in dem Ansaugdurchgang (26),
einen Luft-Kraftstoff-Verhältnis-Sensor (56) zum Anordnen in dem Abgasdurchgang (27),
einen Temperatursensor (52) zum Erfassen der Temperatur der Verbrennungskraftmaschine (4),
einen Drehzahlsensor (51) zum Erfassen der Drehzahl der Verbrennungskraftmaschine (4) und
eine Steuereinheit (40) zum Steuern des Kraftstoff-Einspritzventils (31), wobei
die Steuereinheit (40) Folgendes einschließt:

ein Luft-Kraftstoff-Verhältnis-Regelungskorrekturkoeffizienten-Berechnungsmittel (201) zum Berechnen eines Luft-Kraftstoff-Verhältnis-Regelungskorrekturkoeffizienten auf der Grundlage eines durch den Luft-Kraftstoff-Verhältnis-Sensor (56) erfassten Wertes,
ein Mischungsverhältnis-Berechnungsmittel (202) zum Berechnen eines Mischungsverhältnisses von Alkohol eines gemischten Kraftstoffs auf der Grundlage des Luft-Kraftstoff-Verhältnis-Regelungskorrekturkoeffizienten,

ein Berechnungsmittel (203) für das theoretische Luft-Kraftstoff-Verhältnis zum Berechnen eines theoretischen Luft-Kraftstoff-Verhältnisses eines gemischten Kraftstoffs, der das durch das Mischungsverhältnis-Berechnungsmittel (202) berechnete Mischungsverhältnis von Alkohol aufweist,

ein Reflexionskoeffizienten-Berechnungsmittel (300) zum Speichern mehrerer voreingestellter Werte des Luft-Kraftstoff-Verhältnis-Korrekturkoeffizienten, wobei jeder voreingestellte Wert auf der Grundlage eines bestimmten vorbestimmten Mischungsverhältnisses von Alkohol und einer bestimmten vorbestimmten Kraftmaschinentemperatur bestimmt worden sind, und zum Verwenden der voreingestellten Werte zum Durchführen einer Interpolationsberechnung eines Wertes eines Luft-Kraftstoff-Verhältnis-Korrekturkoeffizienten, der das durch das Mischungsverhältnis-Berechnungsmittel (202) berechnete Mischungsverhältnis von Alkohol und die durch den Temperatursensor (52) erfasste Temperatur der Verbrennungskraftmaschine reflektiert,

ein Ziel-Luft-Kraftstoff-Verhältnis-Berechnungsmittel (204) zum Berechnen eines Ziel-Luft-Kraftstoff-Verhältnisses mit Hilfe des theoretischen Luft-Kraftstoff-Verhältnisses auf der Grundlage des Wertes des durch das Reflexionskoeffizienten-Berechnungsmittel (300) berechneten Luft-Kraftstoff-Verhältnis-Korrekturkoeffizienten,

ein Ansaugluftmengen-Berechnungsmittel (101) zum Berechnen einer Ansaugluftmenge in dem Ansaugdurchgang (26) auf der Grundlage des durch den Ansaugdrucksensor (56) erfassten Ansaugdrucks und der durch den Drehzahlsensor (51) erfassten Drehzahl der Verbrennungskraftmaschine und

ein Einspritzmengen-Berechnungsmittel (100) zum Berechnen einer grundlegenden Einspritzmenge für das Kraftstoff-Einspritzventil (31) auf der Grundlage der Ansaugluftmenge und des Ziel-Luft-Kraftstoff-Verhältnisses und zum Berechnen einer tatsächlichen Einspritzmenge für das Kraftstoff-Einspritzventil (31) auf der Grundlage der grundlegenden Einspritzmenge mit Hilfe des Luft-Kraftstoff-Verhältnis-Regelungskorrekturkoeffizienten.

2.  Kraftstoff-Einspritzungssteuervorrichtung (40) für eine Verbrennungskraftmaschine (4) nach Anspruch 1, wobei die Steuereinheit (40) ein Korrekturmittel zum Ausführen einer Korrektur unter Berücksichtigung eines Teil- (Partial-) drucks des gemischten Kraftstoffs, wobei sich der Teildruck in Einklang mit dem Mischungsverhältnis von Alkohol verändert.

3.  Kraftstoff-Einspritzungssteuervorrichtung (40) für eine Verbrennungskraftmaschine (4) nach Anspruch 2, wobei das Korrekturmittel ein Einspritzmengen-Korrekturmittel zum Korrigieren einer durch das Einspritzmengen-Berechnungsmittel (10) berechneten tatsächlichen Einspritzmenge auf der Grundlage der durch den Temperatursensor (52) erfassten Kraftmaschinentemperatur und des durch das Mischungsverhältnis-Berechnungsmittel (202) berechneten Mischungsverhältnisses von Alkohol umfasst.

4.  Kraftstoff-Einspritzungssteuervorrichtung (40) für eine Verbrennungskraftmaschine (4) nach Anspruch 2 oder 3, wobei
das Korrekturmittel ein Ansaugluftmengen-Korrekturmittel zum Berechnen der Ansaugluftmenge in dem Ansaugdurchgang (26) auf der Grundlage der durch den Drehzahlsensor (51) erfassten Drehzahl der Verbrennungskraftmaschine (4), des durch den Ansaugdrucksensor (54) erfassten Ansaugdrucks und des durch das Mischungsverhältnis-Berechnungsmittel (202) berechneten Mischungsverhältnisses von Alkohol umfasst.

5.  Kraftstoff-Einspritzungssteuervorrichtung (40) für eine Verbrennungskraftmaschine (4) nach Anspruch 4, wobei das Ansaugluftmengen-Korrekturmittel ein Reflexionskoeffizienten-Berechnungsmittel zum Speichern wenigstens eines ersten Ansaugluftmengen-Umrechnungskenfeldes zum Berechnen der Ansaugluftmenge auf der Grundlage der Drehzahl der Verbrennungskraftmaschine und des Ansaugdrucks ist, wobei das erste Ansaugluftmengen-Umrechnungskennfeld für ein erstes Mischungsverhältnis von Alkohol festgesetzt wird und ein zweites Ansaugluftmengen-Umrechnungskennfeld für ein zweites Mischungsverhältnis von Alkohol festgesetzt wird, zum Berechnen einer ersten Ansaugluftmenge auf der Grundlage des ersten Ansaugluftmengen-Umrechnungskennfeldes, wobei die erste Ansaugluftmenge die Ansaugluftmenge in dem Fall ist, dass das Mischungsverhältnis von Alkohol das erste Mischungsverhältnis von Alkohol ist, mit Hilfe der durch den Drehzahlsensor (51) erfassten Drehzahl der Verbrennungskraftmaschine und des durch den Ansaugdrucksensor (54) erfassten Ansaugdrucks und zum Berechnen einer zweiten Ansaugluftmenge auf der Grundlage des zweiten Ansaugluftmengen-Umrechnungskennfeldes, wobei die zweite Ansaugluftmenge die Ansaugluftmenge in dem Fall ist, dass das Mischungsverhältnis von Alkohol das zweite Mischungsverhältnis von Alkohol ist, und
Durchführen einer Interpolationsberechnung eines Wertes der Ansaugluftmenge in Einklang mit dem mit Hilfe des Mischungsverhältnis-Berechnungsmittels (202) berechneten Mischungsverhältnis von Alkohol auf der Grundlage wenigstens der ersten Ansaugluftmenge und der zweiten Ansaugluftmenge ist.

6.  Kraftstoff-Einspritzungssteuervorrichtung (40) für eine Verbrennungskraftmaschine (4) nach einem der vorhergehenden Ansprüche, wobei
    das Reflexionskoeffizienten-Berechnungsmittel (300)
    einen ersten Koeffizientenwert B1 und einen zweiten Koeffizientenwert B2 speichert, wobei der erste Koeffizientenwert B1 ein Wert des Luft-Kraftstoff-Verhältnis-Korrekturkoeffizienten in dem Fall ist, dass das Mischungsverhältnis von Alkohol ein vorbestimmtes Mischungsverhältnis A1 ist, der zweite Koeffizientenwert B2 ein Wert des Luft-Kraftstoff-Verhältnis-Korrekturkoeffizienten in dem Fall ist, dass das Mischungsverhältnis von Alkohol ein vorbestimmtes Mischungsverhältnis A2 ist, oder den ersten Koeffizientenwert B1 und den zweiten Koeffizientenwert B2 durch eine Berechnung gewinnt und
    einen dritten Koeffizientenwert B3 gewinnt durch eine Formel von:

$$B3 = B1 \times (1 - R) + B2 \times R$$

wobei

der Reflexionskoeffizient R = (A3 - A1) / (A2 - A1) und
der dritte Koeffizientenwert B3 ein Wert des Luft-Kraftstoff-Verhältnis-Korrekturkoeffizienten ist, der einem Wert A3 entspricht,
wobei
A3 ein mit Hilfe des Mischungsverhältnis-Berechnungsmittels (202) berechnetes Mischungsverhältnis von Alkohol bezeichnet.

7.  Kraftstoff-Einspritzungssteuervorrichtung (40) für eine Verbrennungskraftmaschine (4) nach einem der vorhergehenden Ansprüche, wobei
    das Reflexionskoeffizienten-Berechnungsmittel (300)
    einen ersten Koeffizientenwert B1 und einen zweiten Koeffizientenwert B2 speichert, wobei der erste Koeffizientenwert B1 ein Wert des Luft-Kraftstoff-Verhältnis-Korrekturkoeffizienten in dem Fall ist, dass das Mischungsverhältnis von Alkohol ein vorbestimmtes Mischungsverhältnis A1 ist, der zweite Koeffizientenwert B2 ein Wert des Luft-Kraftstoff-Verhältnis-Korrekturkoeffizienten in dem Fall ist, dass das Mischungsverhältnis von Alkohol ein vorbestimmtes Mischungsverhältnis A2 ist, oder den ersten Koeffizientenwert B1 und den zweiten Koeffizientenwert B2 durch eine Berechnung gewinnt und
    einen dritten Koeffizientenwert B3 gewinnt durch eine Formel von:

$$B3 = B1 \times (1 - f(R)) + B2 \times f(R)$$

wobei

$$R = (A3 - A1) / (A2 - A1),$$

ein Reflexionskoeffizient f(R) eine nichtlineare Funktion in Bezug auf den Reflexionskoeffizienten f(R) ist und
der dritte Koeffizientenwert B3 ein Wert des Luft-Kraftstoff-Verhältnis-Korrekturkoeffizienten ist, der einem Wert A3 entspricht,
wobei
A3 ein mit Hilfe des Mischungsverhältnis-Berechnungsmittels (202) berechnetes Mischungsverhältnis von Alkohol bezeichnet.

8.  Kraftstoff-Einspritzungssteuervorrichtung (40) für eine Verbrennungskraftmaschine (4) nach einem der vorhergehenden Ansprüche, wobei
    das Reflexionskoeffizienten-Berechnungsmittel (300)
    einen ersten Koeffizientenwert D1 und einen zweiten Koeffizientenwert D2 speichert, wobei der erste Koeffizientenwert D1 ein Wert des Luft-Kraftstoff-Verhältnis-Korrekturkoeffizienten in dem Fall ist, dass die Temperatur der Verbrennungskraftmaschine eine vorbestimmte erste Temperatur C1 ist, der zweite Koeffizientenwert D2 ein Wert des Luft-Kraftstoff-Verhältnis-Korrekturkoeffizienten in dem Fall ist, dass die Temperatur der Verbrennungskraftmaschine eine zweite vorbestimmte Temperatur C2 ist, oder den ersten Koeffizientenwert D1 und den zweiten Koeffizientenwert D2 durch eine Berechnung gewinnt und
einen dritten Koeffizientenwert D3 gewinnt durch eine Formel von:

$$D3 = D1 \times (1 - R) + D2 \times R$$

wobei

der Reflexionskoeffizient R = (C3 -C1) / (C2 - C1) und
der dritte Koeffizientenwert D3 ein Wert des Luft-Kraftstoff-Verhältnis-korrekturkoeffizienten ist, der einem Wert C3 entspricht,
wobei
C3 eine mit Hilfe des Temperatursensors (52) erfasste dritte Temperatur der Verbrennungskraftmaschine bezeichnet.

9. Kraftstoff-Einspritzungssteuervorrichtung (40) für eine Verbrennungskraftmaschine (4) nach einem der vorhergehenden Ansprüche, wobei
das Reflexionskoeffizienten-Berechnungsmittel (300)
einen ersten Koeffizientenwert D1 und einen zweiten Koeffizientenwert D2 speichert, wobei der erste Koeffizientenwert D1 ein Wert des Luft-Kraftstoff-Verhältnis-Korrekturkoeffizienten in dem Fall ist, dass die Temperatur der Verbrennungskraftmaschine eine vorbestimmte erste Temperatur C1 ist, der zweite Koeffizientenwert B2 ein Wert des Luft-Kraftstoff-Verhältnis-Korrekturkoeffizienten in dem Fall ist, dass die Temperatur der Verbrennungskraftmaschine eine zweite vorbestimmte Temperatur C2 ist, oder den ersten Koeffizientenwert D1 und den zweiten Koeffizientenwert D2 durch eine Berechnung gewinnt und
einen dritten Koeffizientenwert D3 gewinnt durch eine Formel von:

$$D3 = D1 \times (1 - f(R)) + D2 \times f(R)$$

wobei

$$R = (C3 - C1) / (C2 - C1),$$

der Reflexionskoeffizient f(R) eine nichtlineare Funktion in Bezug auf den Reflexionskoeffizienten f(R) ist und
der dritte Koeffizientenwert D3 ein Wert des Luft-Kraftstoff-Verhältnis-Korrekturkoeffizienten ist, der einem Wert C3 entspricht,
wobei
C3 eine mit Hilfe des Temperatursensors (52) erfasste dritte Temperatur der Verbrennungskraftmaschine bezeichnet.

10. Kraftstoff-Einspritzungssteuervorrichtung (40) für eine Verbrennungskraftmaschine (4) nach einem der vorhergehenden Ansprüche, wobei
das Einspritzmengen-Berechnungsmittel (100) Folgendes einschließt:

ein grundlegendes Korrekturmittel zum Verwenden des Luft-Kraftstoff-Verhältnis-Regelungskorrekturkoeffizienten, um eine notwendige Einspritzmenge für das Kraftstoff-Einspritzventil (31) auf der Grundlage der grundlegenden Einspritzmenge zu berechnen,
ein Anhaftungs-und-Mitnahme-Reflexionskoeffizienten-Berechnungsmittel zum Speichern mehrerer voreingestellter Werte eines Korrekturkoeffizienten in Bezug auf die Anhaftung eines Kraftstoffs in dem Ansaugdurchgang oder auf die Mitnahme des an dem Ansaugdurchgang angehafteten Kraftstoffs, wobei der Korrekturkoeffizient auf der Grundlage des Mischungsverhältnisses von Alkohol und der Temperatur der Verbrennungskraftmaschine bestimmt wird, und zum Verwenden der voreingestellten Werte des Korrekturkoeffizienten, um eine Interpolationsberechnung eines Wertes eines Korrekturkoeffizienten durchzuführen, der das durch das Mischungsverhältnis-Berechnungsmittel berechnete Mischungsverhältnis von Alkohol und die durch den Temperatursensor (52) erfasste Temperatur der Verbrennungskraftmaschine reflektiert, und
ein Anhaftungs-und-Mitnahme-Berechnungsmittel zum Verwenden des mit Hilfe des Anhaftungs-und-Mitnahme-Reflexionskoeffizienten-Berechnungsmittels berechneten Korrekturkoeffizienten, um eine Korrektur für die mit Hilfe des grundlegenden Korrekturmittel berechnete notwendige Einspritzmenge auszuführen.

11. Kraftstoff-Einspritzungssteuervorrichtung (40) für eine Verbrennungskraftmaschine (4) nach einem der vorhergehenden Ansprüche, wobei
das Einspritzmengen-Berechnungsmittel (100) Folgendes einschließt:

ein grundlegendes Korrekturmittel zum Verwenden des Luft-Kraftstoff-Verhältnis-Regelungskorrekturkoeffizienten, um eine notwendige Einspritzmenge für das Kraftstoff-Einspritzventil auf der Grundlage der grundlegenden Einspritzmenge zu berechnen,
ein Reflexionskoeffizienten-Berechnungsmittel für eine Charakteristik der Einspritzzeit/der Einspritzmasse zum Speichern mehrerer voreingestellter Werte eines Korrekturkoeffizienten in Bezug auf den Einspritzdruck des Kraftstoff-Einspritzventils (31) und in Bezug auf eine Charakteristik der Einspritzzeit/der Einspritzmasse, wobei der Korrekturkoeffizient auf der Grundlage des Mischungsverhältnisses von Alkohol bestimmt wird, und zum Verwenden der voreingestellten Werte des Korrekturkoeffizienten, um eine Interpolationsberechnung eines Wertes eines Korrekturkoeffizienten durchzuführen, der das durch das Mischungsverhältnis-Berechnungsmittel (202) berechnete Mischungsverhältnis von Alkohol reflektiert, und
ein Einspritzzeit-Berechnungsmittel zum Verwenden des mit Hilfe des Reflexionskoeffizienten-Berechnungsmittels berechneten Korrekturkoeffizienten für eine Charakteristik der Einspritzzeit/der Einspritzmasse, um eine notwendige Einspritzmenge zu korrigieren und um eine Einspritzzeit des Kraftstoff-Einspritzventils auf der Grundlage der korrigierten notwendigen Einspritzmenge zu berechnen.

12. Kraftstoff-Einspritzungssteuervorrichtung (40) für eine Verbrennungskraftmaschine (4) nach einem der vorhergehenden Ansprüche, wobei
das Einspritzmengen-Berechnungsmittel (100) Folgendes einschließt:

ein grundlegendes Korrekturmittel zum Verwenden des Luft-Kraftstoff-Verhältnis-Regelungskorrekturkoeffizienten, um eine notwendige Einspritzmenge für das Kraftstoff-Einspritzventil (31) auf der Grundlage der grundlegenden Einspritzmenge zu berechnen,
ein Reflexionskoeffizienten-Berechnungsmittel für eine unwirksame Einspritzzeit zum Speichern mehrerer voreingestellter Werte eines Korrekturkoeffizienten in Bezug auf die unwirksame Einspritzzeit des Kraftstoff-Einspritzventils (31), wobei der Korrekturkoeffizient auf der Grundlage des Mischungsverhältnisses von Alkohol bestimmt wird, und Verwenden der voreingestellten Werte des Korrekturkoeffizienten, um eine Interpolationsberechnung eines Wertes eines Korrekturkoeffizienten durchzuführen, der das durch das Mischungsverhältnis-Berechnungsmittel (202) berechnete Mischungsverhältnis von Alkohol reflektiert, und
ein Einspritzzeit-Berechnungsmittel zum Verwenden des mit Hilfe des Reflexionskoeffizienten-Berechnungsmittels berechneten Korrekturkoeffizienten für eine unwirksame Einspritzzeit, um eine notwendige Einspritzmenge zu korrigieren und um eine Einspritzzeit des Kraftstoff-Einspritzventils (31) auf der Grundlage der korrigierten notwendigen Einspritzmenge zu berechnen.

13. Kraftmaschine (4), welche die Kraftstoff-Einspritzungssteuervorrichtung (40) nach einem der vorhergehenden Ansprüche umfasst.

14. Reitsitzfahrzeug (1), das die Kraftstoff-Einspritzungssteuervorrichtung (40) für eine Verbrennungskraftmaschine (4) nach einem der Ansprüche 1 bis 12 umfasst.

15. Kraftstoff-Einspritzungssteuerverfahren für eine Verbrennungskraftmaschine, die ein Kraftstoff-Einspritzventil, das dazu in der Lage ist, einen gemischten Kraftstoff einzuspritzen, der durch das Mischen von Benzin und Alkohol gebildet wird, einen Ansaugdurchgang und einen Abgasdurchgang einschließt, wobei das Kraftstoff-Einspritzungssteuerverfahren Folgendes umfasst:

(a) das Berechnen eines Luft-Kraftstoff-Verhältnis-Regelungskorrekturkoeffizienten auf der Grundlage eines durch einen in dem Abgasdurchgang bereitgestellten Luft-Kraftstoff-Verhältnis-Sensor erfassten Wertes,
(b) das Berechnen eines Mischungsverhältnisses von Alkohol eines gemischten Kraftstoffs auf der Grundlage des in Schritt (a) berechneten Luft-Kraftstoff-Verhältnis-Regelungskorrekturkoeffizienten,
(c) das Berechnen eines theoretischen Luft-Kraftstoff-Verhältnisses eines gemischten Kraftstoffs, der das in Schritt (b) berechnete Mischungsverhältnis von Alkohol aufweist,

(d) das Speichern mehrerer voreingestellter Werte eines Kraftstoff-Verhältnis-Korrekturkoeffizienten, wobei die voreingestellten Werte auf der Grundlage eines bestimmten Mischungsverhältnisses von Alkohol und einer bestimmten Temperatur bestimmt worden sind, das Verwenden der voreingestellten Werte, um eine Interpolationsberechnung eines Wertes eines Luft-Kraftstoff-Verhältnis-Korrekturkoeffizienten durchzuführen, der das in Schritt (b) berechnete Mischungsverhältnis von Alkohol und die durch einen Temperatursensor erfasste Temperatur der Verbrennungskraftmaschine reflektiert,

(e) das Berechnen eines Ziel-Luft-Kraftstoff-Verhältnisses mit Hilfe des theoretischen Luft-Kraftstoff-Verhältnisses auf der Grundlage des Wertes des in Schritt (d) berechneten Luft-Kraftstoff-Verhältnis-Korrekturkoeffizienten,

(f) das Berechnen einer Ansaugluftmenge in dem Ansaugdurchgang auf der Grundlage des durch einen Ansaugdrucksensor erfassten Ansaugdrucks und der durch einen Drehzahlsensor erfassen Drehzahl der Verbrennungskraftmaschine und

(g) das Berechnen einer grundlegenden Einspritzmenge für das Kraftstoff-Einspritzventil auf der Grundlage der Ansaugluftmenge und des Ziel-Luft-Kraftstoff-Verhältnisses und das Berechnen einer tatsächlichen Einspritzmenge für das Kraftstoff-Einspritzventil auf der Grundlage der grundlegenden Einspritzmenge mit Hilfe des Luft-Kraftstoff-Verhältnis-Regelungskorrekturkoeffizienten.

## Revendications

1. Dispositif de commande d'injection de carburant (40) destiné à un moteur à combustion interne (4) qui comprend une soupape d'injection de carburant (31) capable d'injecter un carburant mixte formé en mélangeant de l'essence et de l'alcool, un passage d'admission (26) et un passage d'échappement (27), le dispositif de commande d'injection de carburant (40) comprenant :

un capteur de pression d'admission (54) destiné à détecter la pression d'admission dans le passage d'admission (26) ;
un capteur de rapport air/carburant (56) destiné à être placé dans le passage d'échappement (27) ;
un capteur de température (52) destiné à détecter la température du moteur combustion interne (4) ;
un capteur de vitesse (51) destiné à détecter la vitesse du moteur à combustion interne (4) ; et
une unité de commande (40) destinée à contrôler la soupape d'injection de carburant (31), dans lequel l'unité de commande (40) comprend :

un moyen de calcul de coefficient de correction de retour de rapport air/carburant (201) destiné à calculer un coefficient de correction de retour de rapport air/carburant sur la base d'une valeur détectée par le capteur de rapport air/carburant (56) ;
un moyen de calcul de rapport de mélange (202) destiné à calculer un rapport de mélange d'alcool d'un carburant mixte sur la base du coefficient de correction de retour de rapport air/carburant ;
un moyen de calcul de rapport air/carburant théorique (203) destiné à calculer un rapport air/carburant théorique d'un carburant mixte qui présente le rapport de mélange d'alcool calculé par le moyen de calcul de rapport de mélange (202) ;
un moyen de calcul de coefficient de réflexion (300) destiné à stocker une pluralité de valeurs prédéfinies de coefficient de correction de rapport air/carburant, chaque valeur prédéfinie ayant été déterminée sur la base d'un rapport de mélange particulier prédéterminé de l'alcool et d'une température particulière prédéterminée du moteur, et qui utilise les valeurs prédéfinies pour effectuer un calcul d'interpolation d'une valeur de coefficient de correction de rapport air/carburant qui reflète le rapport de mélange d'alcool calculé par le moyen de calcul de rapport de mélange (202), et la température du moteur à combustion interne détectée par le capteur de température (52) ;
un moyen de calcul de rapport air/carburant cible (204) destiné à calculer un rapport air/carburant cible à l'aide du rapport air/carburant théorique sur la base de la valeur du coefficient de correction de rapport air/carburant calculé par le moyen de calcul de coefficient de réflexion (300) ;
un moyen de calcul de quantité d'air d'admission (101) destiné à calculer une quantité d'air d'admission dans le passage d'admission (26) sur la base de la pression d'admission détectée par le capteur de pression d'admission (56) et de la vitesse du moteur à combustion interne détectée par le capteur de vitesse (51) ; et
un moyen de calcul de quantité d'injection (100) destiné à calculer une quantité d'injection de base pour la soupape d'injection de carburant (31) sur la base de la quantité d'air d'admission et du rapport air/carburant cible, et à calculer une quantité d'injection réelle pour la soupape d'injection de carburant (31) sur la base de la quantité d'injection de base à l'aide du coefficient de correction de retour de rapport air/carburant.

2. Dispositif de commande d'injection de carburant (40) destiné à un moteur à combustion interne (4) selon la revendication 1, dans lequel
l'unité de commande (40) comprend un moyen de correction destiné à effectuer une correction en prenant en compte la pression divisée (partielle) du carburant mixte, la pression divisée variant en fonction du rapport de mélange d'alcool.

3. Dispositif de commande d'injection de carburant (40) destiné à un moteur à combustion interne (4) selon la revendication 2, dans lequel
le moyen de correction comprend un moyen de correction de quantité d'injection destiné à corriger une quantité d'injection réelle calculée par le moyen de calcul de quantité d'injection (100) sur la base de la température du moteur détectée par le capteur de température (52) et du rapport de mélange d'alcool calculé par le moyen de calcul de rapport de mélange (202).

4. Dispositif de commande d'injection de carburant (40) destiné à un moteur à combustion interne (4) selon la revendication 2 ou 3, dans lequel
le moyen de correction comprend un moyen de correction de quantité d'air d'admission destiné à calculer la quantité d'air d'admission dans le passage d'admission (26) sur la base de la vitesse du moteur à combustion interne (4) détectée par le capteur de vitesse (51), de la pression d'admission détectée par le capteur de pression d'admission (54), et du rapport de mélange d'alcool calculé par le moyen de calcul de rapport de mélange (202).

5. Dispositif de commande d'injection de carburant (40) destiné à un moteur à combustion interne (4) selon la revendication 4, dans lequel
le moyen de correction de quantité d'air d'admission est un moyen de calcul de coefficient de réflexion destiné à stocker au moins un premier graphique de conversion de quantité d'air d'admission afin de calculer la quantité d'air d'admission sur la base de la vitesse du moteur à combustion interne et de la pression d'admission, le premier graphique de conversion de quantité d'air d'admission étant défini pour un premier rapport de mélange d'alcool, et un second graphique de conversion de quantité d'air d'admission défini pour un second rapport de mélange d'alcool, afin de calculer une première quantité d'air d'admission sur la base du premier graphique de conversion de quantité d'air d'admission, la première quantité d'air d'admission étant la quantité d'air d'admission qui existe lorsque le rapport de mélange d'alcool correspond au premier rapport de mélange d'alcool, à l'aide de la vitesse du moteur à combustion interne détectée par le capteur de vitesse (51), et de la pression d'admission détectée par le capteur de pression d'admission (54), et à calculer une seconde quantité d'air d'admission sur la base du second graphique de conversion de quantité d'air d'admission, la seconde quantité d'air d'admission étant la quantité d'air d'admission qui existe lorsque le rapport de mélange d'alcool correspond au second rapport de mélange d'alcool, et
à effectuer un calcul d'interpolation d'une valeur de quantité d'air d'admission en fonction du rapport de mélange d'alcool calculé à l'aide du moyen de calcul de rapport de mélange (202) sur la base d'au moins la première quantité d'air d'admission et la seconde quantité d'air d'admission.

6. Dispositif de commande d'injection de carburant (40) destiné à un moteur à combustion interne (4) selon l'une quelconque des revendications précédentes, dans lequel
le moyen de calcul de coefficient de réflexion (300) :

stocke une première valeur de coefficient B1 et une seconde valeur de coefficient B2, la première valeur de coefficient B1 étant une valeur du coefficient de correction de rapport de mélange air/carburant qui existe lorsque le rapport de mélange d'alcool est un rapport de mélange prédéterminé A1, la seconde valeur de coefficient B2 étant une valeur du coefficient de correction de rapport air/carburant qui existe lorsque le rapport de mélange d'alcool est un rapport de mélange prédéterminé A2, ou obtient la première valeur de coefficient B1 et la seconde valeur de coefficient B2 par un calcul, et
obtient une troisième valeur de coefficient B3 à l'aide d'une formule :

$$B3 = B1 \times (1 - R) + B2 \times R$$

dans laquelle
le coefficient de réflexion $R = (A3 - A1) / (A2 / A1)$, et

la troisième valeur de coefficient B3 est une valeur du coefficient de correction de rapport de mélange air/carburant qui correspond à une valeur A3

où

A3 indique un rapport de mélange d'alcool calculé à l'aide du moyen de calcul de rapport de mélange (202).

7. Dispositif de commande d'injection de carburant (40) destiné à un moteur à combustion interne (4) selon l'une quelconque des revendications précédentes, dans lequel
le moyen de calcul de coefficient de réflexion (300) :

stocke une première valeur de coefficient B1 et une seconde valeur de coefficient B2, la première valeur de coefficient B1 étant une valeur du coefficient de correction de rapport air/carburant qui existe lorsque le rapport de mélange d'alcool est un rapport de mélange prédéterminé A1, la seconde valeur de coefficient B2 étant une valeur de coefficient de correction de rapport de mélange air/carburant qui existe lorsque le rapport de mélange d'alcool est un rapport de mélange prédéterminé A2, ou obtient la première valeur de coefficient B1 et la seconde valeur de coefficient B2 par un calcul, et
obtient une troisième valeur de coefficient B3 par une formule :

$$B3 = B1 \times (1 - f(R)) + B2 \times f(R)$$

dans laquelle

R = (A3 - A1) / (A2 / A1),
un coefficient de réflexion f(R) est une fonction non linéaire liée au coefficient de réflexion f(R), et
la troisième valeur de coefficient B3 est une valeur du coefficient de correction de rapport air/carburant qui correspond à une valeur A3

où

A3 indique un rapport de mélange d'alcool calculé à l'aide du moyen de calcul de rapport de mélange (202).

8. Dispositif de commande d'injection de carburant (40) destiné à un moteur à combustion interne (4) selon l'une quelconque des revendications précédentes, dans lequel
le moyen de calcul de coefficient de réflexion (300) :

stocke une première valeur de coefficient D1 et une seconde valeur de coefficient D2, la première valeur de coefficient D1 étant une valeur du coefficient de correction de rapport air/carburant qui existe lorsque la température du moteur à combustion interne est une première température prédéterminée C1, la seconde valeur de coefficient D2 étant une valeur de coefficient de correction de rapport air/carburant qui existe lorsque la température du moteur à combustion interne est une seconde température prédéterminée C2, ou obtient la première valeur de coefficient D1 et la seconde valeur de coefficient D2 par un calcul, et
obtient une troisième valeur de coefficient D3 par une formule :

$$D3 = D1 \times (1 - R) + D2 \times R$$

dans laquelle

$$\text{le coefficient de réflexion } R = (C3 - C1) / (C2 - C1),$$

et

la troisième valeur de coefficient D3 est une valeur du coefficient de correction de rapport air/carburant qui correspond à une valeur C3

où

C3 indique une troisième température du moteur à combustion interne détectée à l'aide du capteur de température (52).

**9.** Dispositif de commande d'injection de carburant (40) destiné à un moteur à combustion interne (4) selon l'une quelconque des revendications précédentes, dans lequel
le moyen de calcul de coefficient de réflexion (300) :

stocke une première valeur de coefficient D1 et une seconde valeur de coefficient D2, la première valeur de coefficient D1 étant une valeur du coefficient de correction de rapport air/carburant qui existe lorsque la température du moteur à combustion interne est une première température prédéterminée C1, la seconde valeur de coefficient D2 étant une valeur de coefficient de correction de rapport air/carburant qui existe lorsque la température du moteur à combustion interne est une seconde température prédéterminée C2, ou obtient la première valeur de coefficient D1 et la seconde valeur de coefficient D2 par un calcul, et
obtient une troisième valeur de coefficient D3 par une formule :

$$D3 = D1 \times (1 - f(R)) + D2 \times f(R)$$

dans laquelle

$$R = (C3 - C1) / (C2 - C1),$$

le coefficient de réflexion f(R) est une fonction non linéaire liée au coefficient de réflexion f(R), et
la troisième valeur de coefficient D3 est une valeur du coefficient de correction de rapport air/carburant qui correspond à une valeur C3
où
C3 indique une troisième température du moteur à combustion interne détectée à l'aide du capteur de température (52).

**10.** Dispositif de commande d'injection de carburant (40) destiné à un moteur à combustion interne (4) selon l'une quelconque des revendications précédentes, dans lequel
le moyen de calcul de quantité d'injection (100) comprend :

un moyen de correction de base destiné à utiliser le coefficient de correction de retour de rapport air/carburant afin de calculer une quantité d'injection nécessaire pour la soupape d'injection de carburant (31) sur la base de la quantité d'injection de base ;
un moyen de calcul de coefficient de réflexion d'adhérence et d'éloignement destiné à stocker plusieurs valeurs prédéfinies d'un coefficient de correction lié à l'adhérence d'un carburant dans le passage d'admission ou à l'éloignement du carburant qui a adhéré au passage d'admission, le coefficient de correction étant déterminé sur la base du rapport de mélange d'alcool et de la température du moteur à combustion interne, et à utiliser les valeurs prédéfinies du coefficient de correction afin d'effectuer un calcul d'interpolation d'une valeur d'un coefficient de correction qui reflète le rapport de mélange d'alcool calculé par le moyen de calcul de rapport de mélange, et la température du moteur à combustion interne détectée par le capteur de température (52) ; et
un moyen de calcul d'adhérence et d'éloignement destiné à utiliser le coefficient de correction calculé à l'aide du moyen de calcul de coefficient de réflexion d'adhérence et d'éloignement afin d'effectuer une correction pour la quantité d'injection nécessaire calculée à l'aide du moyen de correction de base.

**11.** Dispositif de commande d'injection de carburant (40) destiné à un moteur à combustion interne (4) selon l'une quelconque des revendications précédentes, dans lequel
le moyen de calcul de quantité d'injection (100) comprend :

un moyen de correction de base destiné à utiliser le coefficient de correction de retour de rapport air/carburant afin de calculer une quantité d'injection nécessaire pour la soupape d'injection de carburant sur la base de la quantité d'injection de base ;
un moyen de calcul de coefficient de réflexion destiné à une caractéristique de la durée d'injection/de la masse d'injection et à stocker plusieurs valeurs prédéfinies d'un coefficient de correction lié à la pression d'injection de la soupape d'injection de carburant (31), et lié à une caractéristique de la durée d'injection/de la masse d'injection, le coefficient de correction étant déterminé sur la base du rapport de mélange d'alcool, et à utiliser les valeurs prédéfinies du coefficient de correction afin d'effectuer un calcul d'interpolation d'une valeur d'un coefficient de correction qui reflète le rapport de mélange d'alcool calculé à l'aide du moyen de calcul de rapport de mélange (202) ; et

un moyen de calcul de durée d'injection destiné à utiliser le coefficient de correction calculé à l'aide du moyen de calcul de coefficient de réflexion pour une caractéristique de la durée d'injection/de la masse d'injection afin de corriger une quantité d'injection nécessaire, et de calculer la durée d'injection de la soupape d'injection de carburant sur la base de la quantité d'injection nécessaire corrigée.

12. Dispositif de commande d'injection de carburant (40) destiné à un moteur à combustion interne (4) selon l'une quelconque des revendications précédentes, dans lequel

le moyen de calcul de quantité d'injection (100) comprend :

un moyen de correction de base destiné à utiliser le coefficient de correction de retour de rapport air/carburant afin de calculer une quantité d'injection nécessaire par la soupape d'injection de carburant (31) sur la base de la quantité d'injection de base ;

un moyen de calcul de coefficient de réflexion pendant une durée d'injection inefficace, destiné à stocker plusieurs valeurs prédéfinies d'un coefficient de correction lié à une durée d'injection inefficace de la soupape d'injection de carburant (31), le coefficient de correction étant déterminé sur la base du rapport de mélange d'alcool, et à utiliser les valeurs prédéfinies du coefficient de correction afin d'effectuer un calcul d'interpolation d'une valeur d'un coefficient de correction qui reflète le rapport de mélange d'alcool calculé à l'aide du moyen de calcul de rapport de mélange (202) ; et

un moyen de calcul de durée d'injection destiné à utiliser le coefficient de correction calculé à l'aide du moyen de calcul de coefficient de réflexion pendant une durée d'injection inefficace afin de corriger une quantité d'injection nécessaire et de calculer la durée d'injection de la soupape d'injection de carburant (31) sur la base de la quantité d'injection nécessaire corrigée.

13. Moteur (4) qui comprend le dispositif de commande d'injection de carburant (40) selon l'une quelconque des revendications précédentes.

14. Véhicule à enfourcher (1) qui comprend le dispositif de commande d'injection de carburant (40) destiné à un moteur à combustion interne (4) selon l'une quelconque des revendications 1 à 12.

15. Procédé de commande d'injection de carburant destiné à un moteur à combustion interne qui comprend une soupape d'injection de carburant capable d'injecter un carburant mixte formé en mélangeant de l'essence et de l'alcool, un passage d'admission et un passage d'échappement, le procédé de commande d'injection de carburant comprenant :

(a) le calcul d'un coefficient de correction de retour de rapport air/carburant sur la base d'une valeur détectée par un capteur de rapport air/carburant prévu dans le passage d'échappement ;

(b) le calcul d'un rapport de mélange d'alcool d'un carburant mixte sur la base du coefficient de correction de retour de rapport air/carburant calculé à l'étape (a) ;

(c) le calcul d'un rapport air/carburant théorique d'un carburant mixte qui présente le rapport de mélange d'alcool calculé à l'étape (b) ;

(d) le stockage d'une pluralité de valeurs prédéfinies de coefficient de correction de rapport de carburant, la valeur prédéfinie ayant été déterminée sur la base d'un rapport de mélange particulier d'alcool et d'une température particulière, l'utilisation des valeurs prédéfinies pour effectuer un calcul d'interpolation d'une valeur d'un coefficient de correction de rapport air/carburant qui reflète le rapport de mélange d'alcool calculé à l'étape (b), et de la température du moteur à combustion interne détectée par un capteur de température ;

(e) le calcul d'un rapport air/carburant cible à l'aide du rapport air/carburant théorique sur la base de la valeur du coefficient de correction de rapport air/carburant calculé à l'étape (d) ;

(f) le calcul d'une quantité d'air d'admission dans le passage d'admission sur la base de la pression d'admission détectée par un capteur de pression d'admission, et de la vitesse du moteur à combustion interne détectée par un capteur de vitesse ; et

(g) le calcul d'une quantité d'injection de base pour la soupape d'injection de carburant sur la base de la quantité d'air d'admission et du rapport air/carburant cible, et le calcul d'une quantité d'injection réelle pour la soupape d'injection de carburant sur la base de la quantité d'injection de base à l'aide du coefficient de correction de retour de rapport air/carburant.

FIG. 1

FIG. 2

FIG. 3

FIG. 4

```
              ┌─────────────┐
              │    START    │
              └──────┬──────┘
                     │
        ┌────────────▼────────────┐
        │ DETECTING INTAKE PRESSURE│─── S1
        │    AND ENGINE SPEED      │
        └────────────┬────────────┘
                     │
          ┌──────────▼──────────┐
          │ CALCULATING INTAKE  │─── S2
          │     AIR AMOUNT      │
          └──────────┬──────────┘
                     │
          ┌──────────▼──────────┐
          │ CALCULATING TARGET  │─── S3
          │   AIR FUEL RATIO    │
          └──────────┬──────────┘
                     │
          ┌──────────▼──────────┐
          │ CALCULATING BASIC   │─── S4
          │     FUEL MASS       │
          └──────────┬──────────┘
                     │
          ┌──────────▼──────────┐
          │    CALCULATING      │─── S5
          │ CYLINDER NECESSARY  │
          │     FUEL MASS       │
          └──────────┬──────────┘
                     │
          ┌──────────▼──────────┐
          │ ADHESION AND TAKE-AWAY│─── S6
          │    CALCULATION      │
          └──────────┬──────────┘
                     │
        ┌────────────▼────────────┐
        │ CALCULATING DRIVE TIME OF│─── S7
        │   FUEL INJECTION VALVE   │
        └────────────┬────────────┘
                     │
          ┌──────────▼──────────┐
          │ ADDING INEFFECTIVE  │─── S8
          │   INJECTION TIME    │
          └──────────┬──────────┘
                     │
          ┌──────────▼──────────┐
          │   DRIVING FUEL      │─── S9
          │  INJECTION VALVE    │
          └──────────┬──────────┘
                     │
              ┌──────▼──────┐
              │   RETURN    │
              └─────────────┘
```

FIG. 5

CALCULATION OF TARGET
AIR FUEL RATIO

START

CALCULATING O₂ FB
CORRECTION COEFFICIENT ⟋ S11

LEARNING MIXING RATIO OF
ETHANOL ⟋ S12

CALCULATING THEORETICAL
AIR FUEL RATIO ⟋ S13

INTERPOLATION CALCULATION
OF CORRECTION COEFFICIENT λ ⟋ S14

CALCULATING TARGET AIR
FUEL RATIO ⟋ S15

RETURN

FIG. 6

FIG. 7

FIG. 8

FIG. 9

REFLECTION RATE [%]

MIXING RATIO OF ETHANOL [%]

FIG. 10

QT [ms / mg] OF E22 AND E100

QT (ms/mg)

——◆—— QT [ms / mg] OF E22    ----■----QT [ms / mg] OF E100

INJECTION PRESSURE (kPa)

## FIG. 11

LINEAR INTERPOLATION

QT (ms/mg)

0%  20%  40%  60%  80%  100%

—◆— QT (ms/mg)    ---■--- LINEAR INTERPOLATION VALUE OF E30

MIXING RATIO OF ETHANOL (%)

FIG. 12

NONLINEAR INTERPOLATION

QT (ms/mg)

0%      20%      40%      60%      80%      100%

——◆—— QT (ms/mg)      ----■---- LINEAR INTERPOLATION VALUE OF E30

MIXING RATIO OF ETHANOL (%)

FIG. 13

FIG. 14

FIG. 15

FIG. 16

MIXING RATIO OF ETHANOL          TEMPERATURE OF ENGINE

Ecorr.

FIG. 17

FIG. 18

(a)

(b)

**EP 2 037 105 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5125984 A
- WO 2006129198 A1
- US 2004162667 A1